(19) **Europäisches Patentamt European Patent Office Office européen des brevets**

(11) **EP 1 808 276 B1**

(12) **EUROPEAN PATENT SPECIFICATION**

(45) Date of publication and mention of the grant of the patent:
**17.02.2010 Bulletin 2010/07**

(51) Int Cl.:
*B25J 17/00* (2006.01)  *B25J 5/00* (2006.01)
*B25J 19/00* (2006.01)  *A63H 11/18* (2006.01)

(21) Application number: **05768955.6**

(22) Date of filing: **05.08.2005**

(86) International application number:
**PCT/JP2005/014420**

(87) International publication number:
**WO 2006/027918 (16.03.2006 Gazette 2006/11)**

(54) **LEGGED MOBILE ROBOT WITH A LEG JOINT ASSIST DEVICE**

SCHREITROBOTER MIT BEINEN UND EINER BEINGELENKUNTERSTÜTZUNGSVORRICHTUNG

ROBOT MARCHEUR MOBILE AVEC UN DISPOSITIF D'ASSISTANCE DE JOINT DE JAMBE

(84) Designated Contracting States:
**DE FR GB**

(30) Priority: **06.09.2004 JP 2004257962**

(43) Date of publication of application:
**18.07.2007 Bulletin 2007/29**

(73) Proprietors:
• **HONDA MOTOR CO., LTD.**
  **Tokyo 107-8556 (JP)**
• **Showa Corporation**
  **Gyoda-shi,**
  **Saitama 361-8506 (JP)**

(72) Inventors:
• **TAKENAKA, Toru,**
  **c/o K.K. HONDA,**
  **GIJUTSU KENKYUSHO**
  **Wako-shi, Saitama 3510193 (JP)**
• **GOMI, Hiroshi,**
  **c/o K.K. HONDA,**
  **GIJUTSU KENKYUSHO**
  **Wako-shi, Saitama 3510193 (JP)**
• **HAMAYA, Kazushi,**
  **c/o K.K. HONDA,**
  **GIJUTSU KENKYUSHO**
  **Wako-shi, Saitama 3510193 (JP)**
• **AKIMOTO, Kazushi,**
  **K.K. HONDA,**
  **GIJUTSU KENKYUSHU**
  **Wako-shi, Saitama 3510193 (JP)**
• **TANAKA, Katsushi,**
  **c/o SHOWA CORPORATION**
  **Gyoda-shi,**
  **Saitama 3618506 (JP)**

(74) Representative: **Hague, Alison Jane**
**Dehns**
**St Bride's House**
**10 Salisbury Square**
**London**
**EC4Y 8JD (GB)**

(56) References cited:
**EP-A- 1 442 846     GB-A- 2 022 783**
**JP-A- 2003 103 480     JP-A- 2003 145 477**

**Description**

Technical Field

The present invention relates to a legged mobile robot, such as a bipedal mobile robot, having a leg joint assist device for generating an assisting driving force in a joint of a leg of the robot, the assisting driving force assisting a joint actuator for driving the joint.

Background Art

Hitherto, as this type of assist device, there has been known one shown in, for example, Fig. 21 of Japanese Patent Application Publication No. 2003-103480 previously proposed by the present applicant (hereinafter referred to as Patent Document 1) and its equivalent EP-A-1442846, upon which the preamble of claim 1 is based.

The one shown in Fig. 21 of Patent Document 1 includes a gas spring having two air chambers defined by a piston in a cylinder, the gas spring being provided between two link members (a thigh and a crus) connected by a knee joint of each leg of a bipedal mobile robot. This gas spring is used to generate an assisting driving force that acts on the knee joint in parallel to a driving force of a knee joint actuator (an electric motor that drives the knee joint), thereby reducing a burden on the knee joint actuator. In this case, the cylinder and the piston are connected to the thigh and the crus such that the volume of both air chambers in the cylinder changes in response to a bending or stretching motion of the leg at the knee joint, and an assisting driving force is resiliently produced by causing a gas in both air chambers to be compressed or expanded in response to the bending or stretching motion. The both air chambers are connected through the intermediary of a gas passage that has a solenoid switching valve, and the gas spring generates the assisting driving force only when the solenoid valve is closed. Thus, the supply of current to the solenoid switching valve is controlled such that the assisting driving force is generated only during a desired period when the robot travels.

Incidentally, a standard solenoid switching valve is a normally-open type or a normally-closed type equipped with a spring that urges the valve element to a valve-open position or a valve-closed position. In a state wherein the supply of current to the solenoid of the solenoid switching valve has been cut off, an urging force of the spring maintains a valve-open state or a valve-closed state. The standard solenoid switching valve energizes its solenoid to produce a driving force (electromagnetic force) in the opposite direction from the urging force of the spring, and by maintaining the energized state, the valve element of the solenoid switching valve is held at the valve-closed position or the valve-open position against the urging force of the spring.

Thus, using such a standard solenoid switching valve with the one disclosed in Patent Document 1 has resulted in more power consumed when the solenoid switching valve is in the valve-closed state or the valve-open state, preventing reduction of power consumption when a robot travels.

Furthermore, in the one disclosed in Patent Document 1, a pressure difference between the two air chambers acts on the valve element of the solenoid switching valve when the solenoid switching valve is in the valve-closed state. For this reason, especially when the normally-open type solenoid switching valve is used, if the solenoid switching valve is closed to produce the assisting driving force during a period in which the pressure difference acts in the same direction of an urging force of the spring (the direction in which the valve element opens), then the current to be supplied to the solenoid will be large, leading to increased power consumption by the solenoid switching valve. To avoid this, using the normally-closed solenoid switching valve is conceivable; in this case, however, it is required to constantly energize the solenoid of the solenoid switching valve in the valve-open state of the solenoid switching valve. Generally, however, the period during which an assisting driving force is required (the period during which the solenoid switching valve should be closed) is a part of a particular motion of the robot, such as high-speed traveling, so that constantly energizing the solenoid switching valve in periods other than that would inconveniently lead to increased power consumption of the solenoid switching valve.

GB-A- 2 022 783 discloses a listable solenoid valve which does not require to constantly energize the solenoid in the valve-open state and in the valve-closed state.

The present invention has been made with a view of the background described above, and it is an object of the invention to provide a leg joint assist device capable of effectively reducing power consumption of a solenoid switching valve of an assist device with a simple construction in a leg joint assist device that generates an assisting driving force by compression or expansion of a gas caused by a motion of a leg in a state wherein the solenoid switching valve of a gas passage in communication with an air chamber is closed.

Disclosure of Invention

Accordingly, the present invention provides a legged mobile robot equipped with a plurality of legs constructed by consecutively installing a plurality of link members from a body through the intermediary of a plurality of joints, and having a leg joint assist device, the leg joint assist device comprising: an air chamber provided such that its volume changes according to relative displacement motions of a pair of link members connected by a specific joint, at least one joint of the plurality of joints of each leg being defined as the specific joint; a gas passage provided in communication with the air chamber to implement circulation of a gas between the air chamber and an outside thereof; and a solenoid switching valve provided in the gas passage such that it can be opened and closed, wherein the air chamber is hermetically sealed by closing the solenoid switching valve in a predetermined period when the robot travels so as to use an elastic force generated by the gas due to compression or expansion of the gas in the air chamber caused by a change in the volume of the hermetically sealed air chamber as an assisting driving force for the specific joint, the assisting driving force together with a driving force of a joint actuator that drives the specific joint is applied to the specific joint, and the solenoid switching valve is opened in a period other than the predetermined period to place the air chamber in a non-hermetically-sealed state so as to set a maximum value of an elastic force generated by the gas in the air chamber due to a change in the volume of the air chamber to be at least smaller than that in the predetermined period (e.g., the elastic force becomes substantially zero), **characterised in that**

the predetermined period is a period during which the volume of the air chamber changes according to the relative displacement motions of the pair of link members such that the pressure difference between the air chamber and the outside increases from the start of the predetermined period and then decreases to a pressure difference that is substantially equal to the pressure difference at the start,

the solenoid switching valve is installed in the gas passage such that the pressure difference acts on the valve element of the solenoid switching valve in a valve closing direction of the valve element in the predetermined period, and comprises an urging means for urging the valve element in a valve opening direction to actuate the valve element of the solenoid switching valve from the valve-closed state to the valve-open state when the pressure difference decreased to a predetermined value or less, and the solenoid switching valve is constructed such that the valve element is actuated from the valve-open state to the valve-closed state against an urging force of the urging means by energizing a solenoid of the solenoid switching valve in the valve-open state of the valve element, and

the solenoid of the solenoid switching valve is energized only during a period of the predetermined period from the start thereof until the pressure difference increases to a pressure difference that makes it possible to hold the valve element in the valve-closed state against an urging force of the urging means.

According to the present invention, the solenoid switching valve is a normally-open type solenoid switching valve, since the valve element thereof is urged by the urging means in the open-valve direction. However, the pressure difference acts on the valve element of the solenoid switching valve in the valve closing direction of the valve element in the predetermined period (the period during which the solenoid switching valve is closed). Hence, there is no need to energize the solenoid of the solenoid switching valve throughout the predetermined period; it is sufficient to temporarily energize the solenoid only during the period from the start of the predetermined period until the pressure difference increases to the pressure difference that makes it possible to hold the valve element in the valve-closed state against an urging force of the urging means. Since the solenoid switching valve is provided with the urging means, if the pressure difference decreases and lowers down to the predetermined value or less, the solenoid switching valve is automatically switched from the valve-closed state to the valve-open state by an urging force of the urging means, and the solenoid switching valve is maintained in the valve-open state. Thus, the solenoid switching valve can be maintained in the valve-closed state in the predetermined period simply by temporarily energizing the solenoid of the solenoid switching valve in the initial period at the beginning of the predetermined period. This arrangement makes it possible to effectively reduce the power consumption by the solenoid switching valve.

Preferably, the leg joint assist device includes a cylinder connected to one link member of the pair of link members and a piston that is connected to the other link member of the pair of the link members and inserted in the cylinder such that the piston slidably moves in the cylinder in response to relative displacement motions of the pair of link members, wherein the air chamber is composed of a pair of air chambers formed on both sides of the piston in the cylinder, and the gas passage is a passage that provides communication between the pair of air chambers in the cylinder.

According to such embodiments, if the volume of one air chamber in the cylinder decreases due to relative displacement motions of the pair of link members, then the volume of the other air chamber increases. Hence, when the solenoid switching valve is closed, a gas in one air chamber in the cylinder is compressed, while a gas in the other air chamber is expanded, so that the gases in both air chambers will simultaneously produce an elastic force (the assisting driving force). This makes it possible to generate a large assisting driving force in the predetermined period while constituting the air chamber using a small cylinder. In such embodiments, when the solenoid switching valve is open, even if the piston slidably moves in the cylinder in response to relative displacement motions of the pair of link members, the pressures in the two air chambers in the cylinder are maintained to be substantially equal, so that the assisting driving force is maintained to be substantially zero. Further, in such embodiments, with respect to one air chamber of the pair of air chambers in the cylinder, the other air chamber means as the aforesaid "outside."

In embodiments of the present invention, the predetermined period is preferably a period during which each leg when a legged mobile robot is traveling in a predetermined gait mode, such as a high-speed travel of the legged mobile robot, is in contact with a floor. With this arrangement, the assisting driving force can be generated in the state wherein the leg is in contact with the floor when a relatively large driving force is required to be applied to a joint of each leg, thus permitting an effective reduction in a burden on a joint actuator of the specific joint.

If the legged mobile robot is a bipedal mobile robot equipped with two legs, and each leg is provided with a knee joint that allows the leg to bend/stretch at a middle part between the distal portion thereof and the end thereof adjacent to the body, then the specific joint is preferably the knee joint. More specifically, in a bipedal mobile robot, generally, a driving force (rotational force) required for a knee joint increases when traveling, so that a burden on the joint actuator of the specific joint can be effectively reduced by assuming a part of the driving force by the assisting driving force.

In this case, the predetermined period is preferably a period during which a pattern of a time-dependant change of a bending degree of the leg in the knee joint bulges in the direction in which the bending degree increases in the aforesaid period during which each leg is in contact with a floor when the bipedal mobile robot runs. Alternatively, the predetermined period is preferably a period during which a pattern of a time-dependant change of a rotational force to be generated in the knee joint bulges in the direction in which the leg is stretched in the aforesaid period during which each leg is in contact with a floor when the bipedal mobile robot runs. More specifically, when the bipedal mobile robot runs, the pattern of a time-dependent change in the rotational force to be generated in the knee joint bulges in the leg stretching direction (the rotational force in the leg stretching direction increases and then decreases) in the period during which the pattern of a time-dependent change in the leg bending degree in the knee joint bulges in the direction in which the bending degree increases (the period during which the bending degree increases and then decreases). And, during this period, a peak value of a required rotational force of the knee joint (a rotational force in the leg stretching direction) tends to be particularly large. At this time, in response to relative displacement motions (bending/stretching motions in this case) of the pair of link members connected by the knee joint, the assisting driving force can be changed in a pattern that is similar to the pattern of the time-dependent change in the rotational force to be generated in the knee joint. Thus, a burden on the joint actuator of the knee joint (specific joint) can be effectively reduced by setting the predetermined period as described above.

Further, preferred embodiments described above are preferably equipped with a means for determining a desired driving force of the specific joint to cause the legged mobile robot to follow a desired gait of the robot, and a means for controlling a driving force of the joint actuator of the specific joint in the predetermined period such that the sum of the driving force of the joint actuator and the assisting driving force becomes the determined desired driving force. With this arrangement, a burden on the joint actuator of the specific joint (a driving force to be generated in the joint actuator) can be minimized while causing the legged mobile robot to properly follow a desired gait.

Best Mode for Carrying Out the Invention

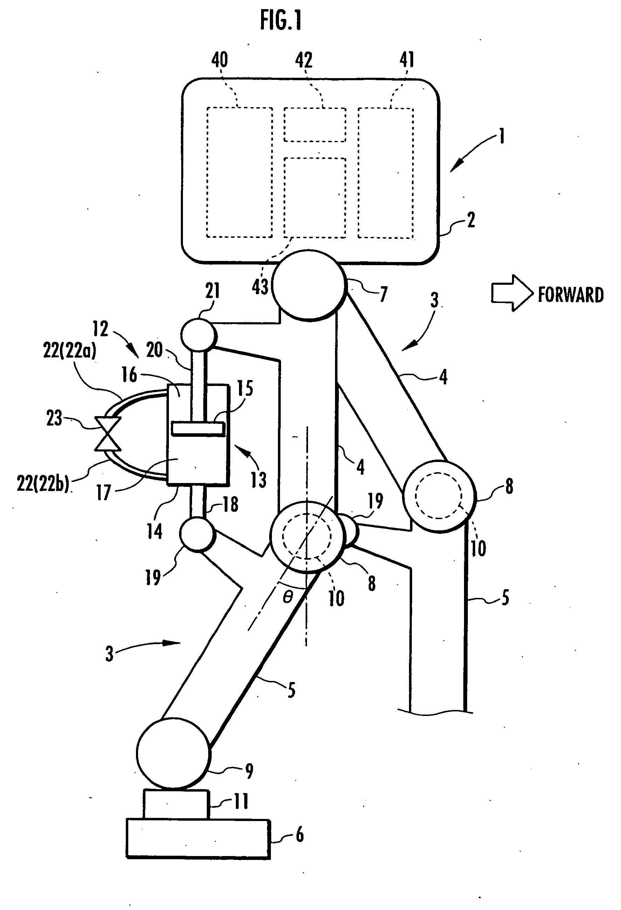

A first leg joint assist device will be described for explanatory purposes with reference to Fig. 1 through Fig. 8. Fig. 1 is a diagram schematically showing the construction of a bipedal mobile robot. As shown in the figure, a robot 1 is provided with two legs 3, 3 extended downward from a body 2, which is the base body thereof. These legs 3, 3 share the same structure, including an assist device, which will be discussed hereinafter: therefore, only a part of one leg 3 (the left leg 3 as observed toward the front of the robot 1 in the figure) is shown.

As with the legs of a human being, each leg 3 is constructed by a thigh 4, a crus 5, and a foot 6 connected in order through the intermediary of a hip joint 7, a knee joint 8, and an ankle joint 9 from the body 2. More specifically, the thigh 4 of each leg 3 is extended from the body 2 through the intermediary of the hip joint 7, the crus 5 is connected to the thigh 4 through the intermediary of the knee joint 8, and the foot 6 is connected to the crus 5 through the intermediary of the ankle joint 9. The thigh 4, the crus 5, and the foot 6 correspond to link members mentioned herein,

In this case, the hip joint 7 is capable of rotational movement about three axes, namely, in the longitudinal direction, the lateral direction, and the vertical direction of the robot 1. The knee joint 8 is capable of rotational movement about one axis, namely, in the lateral direction, and the ankle joint 9 is capable of rotational movement about two axes, namely, in the longitudinal direction and the lateral direction. The rotational movements of the joints 7, 8, and 9 enable each leg 3 to perform motions that are substantially similar to those of the legs of a human being. Further, the knee joint 8, for example, is provided with an electric motor 10 as a joint actuator (hereinafter referred to as the knee joint electric motor 10) to perform its rotational movements about the one axis in the lateral direction. Although not shown, the hip joint 7 is provided with three electric motors to perform its rotational movements about the three axes, and the ankle joint 9 is provided with two electric motors to perform its rotational movements about the two axes.

In the illustrated arrangement, each foot 6 is connected to the ankle joint 9 through the intermediary of a six-axis force sensor 11 to detect the floor reaction forces that act on each foot 6 (translational forces in the directions of three axes, namely, the longitudinal direction, the lateral direction, and the vertical direction of the robot 1, and moments about the three axes). Each of the joints 7, 8, and 9 is provided with an encoder (not shown) to detect their rotational positions (more specifically, the rotational angles of the electric motors of the joints 7 to 9).

In the illustrated arrangement, the knee joint 8 of each leg 3 is defined as the specific joint referred to herein, and each leg 3 is provided with an assist device 12 for generating, as necessary, a rotational force (assisting driving force) to be secondarily applied to the knee joint 8 in combination with a rotational force by the knee joint electric motor 10. The assist device 12 is provided with a gas spring as a spring means 13 for elastically generating an assisting driving force by compression or expansion of a gas.

The spring means 13 has a cylinder structure, and includes a cylinder (external cylinder) 14, a piston 15 slidably inserted in the cylinder 14 in the axial direction thereof, and air chambers 16 and 17 formed on both sides (at top and bottom in the figure) of the piston 15 in the cylinder 14, a gas, such as air, being filled in the air chambers 16 and 17. The cylinder 14 is provided such that it extends substantially in the vertical direction at the rear side of the thigh 4 (in the direction substantially along the lengthwise direction of the thigh 4) of each leg 3, and a connecting member 18 fixed to the lower end portion thereof (bottom portion) is connected to the crus 5 through the intermediary of a free joint 19. Further, a distal portion (upper end portion) of a piston rod 20 that penetrates the upper air chamber 16 and extends from the piston 15 upward relative to the cylinder 14 is connected to the thigh 4 through the intermediary of a free joint 21.

In the spring means 13 having the construction described above, in response to a bending or stretching motion as a relative displacement motion between the thigh 4 and the crus 5 in the knee joint 8 (hereinafter referred to as the knee bending or stretching motion), the cylinder 14 inclines and the piston 15 slidably moves in the cylinder 14 in the axial direction thereof, thus causing the volumes in the air chambers 16 and 17 to change. In this case, as the volume of one of the air chambers 16 and 17 increases, the volume of the other decreases.

The assist device 12 is further provided with a communication tube 22 as a gas passage that is in communication with these air chambers 16 and 17 and connected to the cylinder 14 to implement circulation of gases between the two air chambers 16 and 17, as appropriate, and a solenoid switching valve 23 provided in the communication tube 22 to open/close the communication tube 22. The solenoid switching valve 23 has a function as a means for connecting/ disconnecting the transmission of the knee bending/stretching motion to gases in the air chambers 16 and 17, and opening/closing of the solenoid switching valve 23 switches between a state wherein the knee bending/stretching motion is transmitted to the gases in the air chambers 16 and 17 (a state wherein the gases in the air chambers 16 and 17 accumulate elastic energy in response to the knee bending/stretching motion) and a state wherein the transmission of the knee bending/stretching motion to the gases in the air chambers 16 and 17 is cut off (a state wherein the gases in the air chambers 16 and 17 releases the elastic energy).

In other words, when the solenoid switching valve 23 is opened, the two air chambers 16 and 17 are brought into communication through the communication tube 22, causing the gases in the two air chambers 16 and 17 to mutually circulate. Hence, even if the volumes of the two air chambers 16 and 17 change in response to knee bending/stretching motions, the gases in the two air chambers 16 and 17 are maintained substantially at constant pressures, so that the gases hardly compress or expand. This means that, in the state wherein the solenoid switching valve 23 is open, knee bending/stretching motions are substantially not transmitted to the gases in the two air chambers 16 and 17, leading to a state wherein the gases release the elastic energy (a state corresponding to a natural state of a solid spring). Therefore, in the state wherein the solenoid switching valve 23 is open, the gases in the air chambers 16 and 17 do not generate an elastic force (an assisting rotational force for the knee joint 8)(the elastic force is substantially zero). In other words, when the solenoid switching valve 23 is open, the spring means 13 does not have the function as a spring. Supplementally, in the described arrangement, the air chamber 17 is an outside relative to the air chamber 16, while the air chamber 16 is an outside relative to the air chamber 17.

In addition, closing the solenoid switching valve 23 hermetically seals the two air chambers 16 and 17, preventing the gases in the air chambers 16 and 17 from flowing outside. In this hermetically sealed state, compression or expansion of the gases in the two air chambers 16 and 17 occurs as the volumes of the two air chambers 16 and 17 change due to the knee bending/stretching motions, causing the gases to accumulate the elastic energy. This means that, when the solenoid switching valve 23 is closed, the knee bending/stretching motions are virtually transmitted to the gases in the two air chambers 16 and 17 (the knee bending/stretching motions are transmitted to the gases so as to cause the compression or expansion of the gases in the two air chambers 16 and 17), and the gases accumulate the elastic energy, thereby generating an elastic force. In other words, in the state wherein the solenoid switching valve 23 is closed, the spring means 13 exhibits its original function in response to the bending/stretching motions and generates an elastic force. Then, the generated elastic force is applied to the knee joint 8 as an assisting rotational force (assisting driving force; hereinafter referred to as the knee rotational assisting force) of the knee joint 8 in parallel to the rotational force of the knee joint 8 supplied by the knee joint electric motor 10.

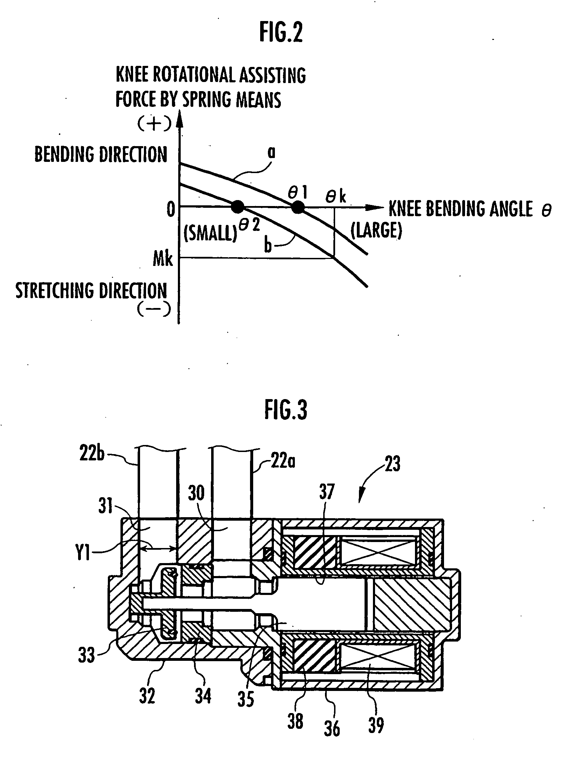

In this case, the knee rotational assisting force generated by the spring means 13 in the state wherein the solenoid switching valve 23 is closed is based on a change amount of a bending angle $\theta$ of the leg 3 at the knee joint 8 (hereinafter referred to as the knee bending angle $\theta$; refer to Fig. 1) from the point from which the valve-closed state of the solenoid switching valve 23 begins (when the valve-open state is changed over to the valve-closed state). A graph illustrating the relationship between the knee rotational assisting force and the knee bending angle $\theta$ is given in Fig. 2. In the present description, more specifically, the knee bending angle $\theta$ is defined as an inclination angle of the axis of the crus 5 with respect to the axis of the thigh 4 of the leg 3, as shown in Fig. 1, and the value of the θ increases as the bending degree of the leg 3 at the knee joint 8 increases. Further, in the present description, a rotational force in the direction in which the leg 3 bends at the knee joint 8 takes a positive value, while a rotational force in the direction in which the leg 3 stretches takes a negative value.

Referring to Fig. 2, if the knee bending angle θ at the starting point of the valve-closed state of the solenoid switching valve 23 (hereinafter referred to as the valve closing start knee bending angle) is "θ1," then the knee rotational assisting force generated by the spring means 13 changes according to the knee bending angle 8, exhibiting the characteristics indicated by, for example, graph a. Further, if the valve closing start knee bending angle is "θ2"(θ1>θ2), then the knee rotational assisting force generated by the spring means 13 changes according to the knee bending angle θ, exhibiting the characteristics indicated by, for example, graph b.

In either case, as the knee bending angle θ increases from the valve closing start knee bending angle, the piston 15 of the spring means 13 slidably moves downward, causing the gas in the upper air chamber 16 to expand while the gas in the lower air chamber 17 to compress, resulting in a higher pressure of the gas in the lower air chamber 17 than the gas in the upper air chamber 16. Hence, as the knee bending angle θ increases from the valve closing start knee bending angle, the knee rotational assisting force increases in the direction in which the leg 3 is stretched. Inversely, as the knee bending angle θ decreases from the valve closing start knee bending angle, the knee rotational assisting force increases in the direction in which the leg 3 is bent. At a valve closing start knee bending angle, the knee rotational assisting force is substantially zero.

Supplementally, the characteristics of changes in the knee rotational assisting forces (the configurations of the graphs a and b in Fig. 2) in response to changes in the knee bending angle θ remain substantially constant independently of a knee bending angle at the start of valve closing. Further, while the solenoid switching valve 23 is open, the pressures of the gases in the two air chambers 16 and 17 are maintained at substantially equal constant pressure levels independently of knee bending/stretching motions, so that the knee rotational assisting forces are steadily substantially zero independently of the knee bending angle θ.

A detailed construction of the solenoid switching valve 23 will now be explained with reference to Fig. 3. Fig. 3 shows a sectional view of the solenoid switching valve 23. The solenoid switching valve 23 is provided with a valve element 33 in a valve element case 32 wherein a passage 30 in communication with a communication tube 22a of the communication tube 22 that is adjacent to the air chamber 16 and a passage 31 in communication with a communication tube 22b adjacent to the air chamber 17 are formed. The valve element 33 is provided such that it is free to move in the direction of an arrow Y1 (the lateral direction in the figure) between the position where the two passages 30 and 31 are placed in communication with each other (the position shown in the figure; hereinafter referred to as the valve-open position) and the position where the valve element 33 abuts against a valve seat 34 to disconnect the two passages 30 and 31 (hereinafter referred to as the valve-closed position), as shown in the figure. Connected to the valve element 33 is a plunger 35, which extends in the movable direction thereof. The plunger 35 is inserted into an insertion hole 37 in a drive case 36 fixedly provided in the valve element case 32 and provided such that it is free to slidably move in the insertion hole 37 in the same direction in which the valve element 33 can be moved. A permanent magnet 38 and a solenoid 39 are provided around the plunger 35 in the drive case 36 in the axial direction of the plunger 35 (the direction in which the valve element 33 can be moved) with an interval given therebetween. The permanent magnet 38 applies a magnetic force for holding the valve element 33 at the valve-open position to the plunger 35 when the valve element 33 is at the valve-open position.

According to the solenoid switching valve 23 having the aforesaid construction, the operation for moving the valve element 33 from the valve-open position to the valve-closed position (the operation for closing the solenoid switching valve 23) and the operation for moving the valve element 33 from the valve-closed position to the valve-open position (the operation for opening the solenoid switching valve 23) are accomplished by temporarily supplying currents in mutually opposite directions to the solenoid 39. More specifically, to perform the operation for closing the solenoid switching valve 23, a current in a predetermined direction (hereinafter referred to as the closing current) is temporarily supplied to the solenoid 39 to cause the plunger 35 to move away from the valve element case 32 by an electromagnetic force generated by the solenoid 39, thereby moving the valve element 33 from the valve-open position to the valve-closed position (the solenoid switching valve 23 is closed from the valve-open state). To perform the operation for opening the solenoid switching valve 23, a current in the opposite direction from the closing current (hereinafter referred to as the opening current) is temporarily supplied to the solenoid 39 to cause the plunger 35 to advance toward the valve element case 32 by an electromagnetic force generated by the solenoid 39, thereby moving the valve element 33 from the valve-closed position to the valve-open position (the solenoid switching valve 23 opens from the valve-closed state).

Further, in the solenoid switching valve 23, even after the supply of the opening current to the solenoid 39 is stopped after the operation for opening the valve, the plunger 35 is held at a position corresponding to the valve-open position of the valve element 33 (the position shown in the figure) by the magnetic force of the permanent magnet 38, thus maintaining the valve-open state of the solenoid switching valve 23. In addition, according to the present arrangement, the solenoid switching valve 23 is closed during a period in which a pressure difference between the air chambers 16 and 17 of the spring means 13 acts in the valve closing direction of the valve element 33 (the direction for urging the valve element 33 toward the valve-closed position) through the passages 30 and 31 (a period during which the pressure in the air chamber 17 is higher than the pressure in the air chamber 16) after the operation for closing the valve, as it will be discussed later. In other words, the solenoid switching valve 23 is installed in the communication tube 22 such that the pressure difference between the air chambers 16 and 17 acts in the valve closing direction of the valve element 33 in the period during which the solenoid switching valve 23 is to be closed. Therefore, when the solenoid switching valve 23 is in the valve-closed state, the pressure difference (hereinafter referred to as the differential pressure) holds the valve element 33 at the valve-closed position even when the supply of the closing current to the solenoid 39 is stopped. Thus, the solenoid switching valve 23 has the self-holding feature for holding the valve-closed state or the valve-open state of the valve element 33 even after the supply of the closing current or the opening current to the solenoid 39 is stopped. In this case, the feature for maintaining the valve-closed state is implemented by the aforesaid differential pressure. Further, the feature for maintaining the valve-open state is implemented by a magnetic force of the permanent magnet 38.

Returning to the explanation of Fig. 1, the body 2 of the robot 1 is provided with a control unit 40 for carrying out mainly the control of the operations of the joints 7, 8, and 9 of the legs 3, an accumulating device 41 serving as a power source for mainly the electric motors of the joints 7, 8 and 9, and the solenoid switching valve 23, a posture sensor 42 for detecting a posture of the body 2 (an inclination angle relative to the vertical direction and a rotational angle about an axis in the vertical direction), and a motor driver circuit 43 for controlling the supply of current to the electric motors. The posture sensor 42 is composed mainly of a gyro sensor and an acceleration sensor. The accumulating device 41 is composed of a battery (secondary battery), a capacitor, or the like.

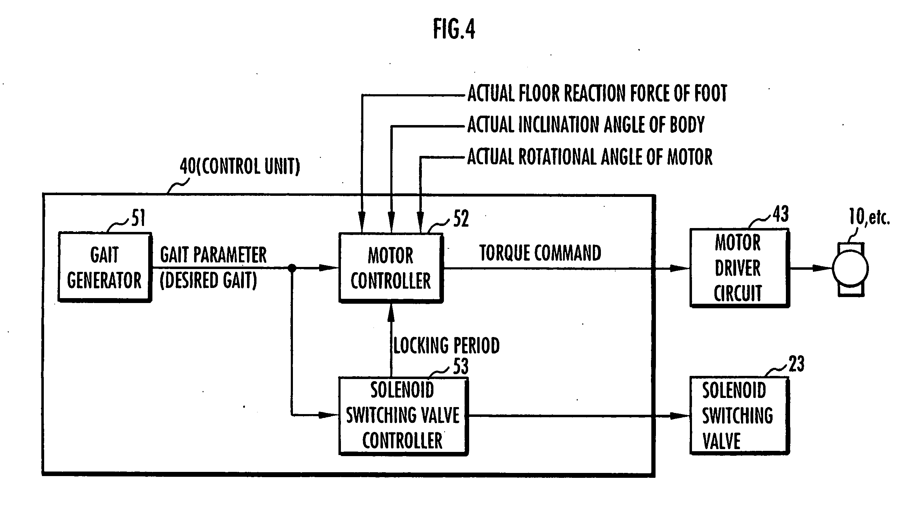

The control unit 40 is composed of an electronic circuit including a microcomputer, etc., and its major functional components include a gait generator 51, a motor controller 52, and a solenoid switching valve controller 53, as shown in the block diagram of Fig. 4.

The gait generator 51 determines gait parameters (a pace, a gait cycle, a motion mode, etc.) that define a desired gait of the robot 1 on the basis of a command received from outside or teaching data (traveling plan data), which has been set beforehand, for each step (each time a supporting leg is switched) or the like when the robot 1 travels, and sequentially generates a desired gait (instantaneous desired gait) for each predetermined control cycle on the basis of the gait parameters. Here, the gait parameters determined by the gait generator 51 are parameters that mainly define a desired gait for causing the robot 1 to perform a standard walking motion or a desired gait for causing the robot 1 to perform a running motion similar to a running motion of a human being. And, the desired gait is composed of, for example, the desired values of a position and a posture of the body 2 of the robot 1 (hereinafter referred to as the desired body position/posture), the desired values of a position and a posture of each foot 6 of the robot 1 (hereinafter referred to as the desired foot position/posture), the desired value of a resultant force (total floor reaction force) of floor reaction forces (translational forces and moments) acting on both feet 6 and 6 (hereinafter referred to as the desired total floor reaction force), and the desired position of a ZMP (Zero Moment Point) as the point of action of the total floor reaction force (hereinafter referred to as the desired ZMP). More specific contents of the components of a desired gait have been explained in detail by, for example, the present applicant in Japanese Unexamined Patent Application Publication No. H11-300660; therefore, the detailed explanation will be omitted herein. The contents of a desired gait are not necessarily limited to those disclosed in the aforesaid publication; basically, other contents may be adopted as long as a desired motion mode of the robot 1 can be expressed thereby.

The solenoid switching valve controller 53 assumes the function for controlling the operation of the solenoid switching valve 23 of the assist device 12. The solenoid switching valve controller 53 determines a period during which the solenoid switching valve 23 is to be set to the valve-closed state (hereinafter referred to as the locking period) and a period during which the solenoid switching valve 23 is to be set to the valve-open state (hereinafter referred to as the free period), as will be discussed later, on the basis of a desired gait generated by the gait generator 51 or the gait parameters defining the desired gait. And, the solenoid switching valve controller 53 controls the supply of current to the solenoid switching valve 23 so as to set the solenoid switching valve 23 to the valve-closed state in the locking period, while it controls the supply of current to the solenoid switching valve 23 so as to set the solenoid switching valve 23 to the valve-open state in the free period. A period other than the locking period is the free period, and a period other than the free period is the locking period; therefore, determining one of the periods will subordinately determine the other period. Actually, therefore, only one of the locking period and the free period may be determined. In the present arrangement, the locking period is determined.

The motor controller 52 sequentially controls the electric motors of the joints 7, 8 and 9, including the knee joint electric motor 10 (specifically, sequentially controls the rotational angles of the electric motors). The motor controller 52 sequentially generates torque commands that define torques to be generated in the electric motors (more specifically, the command values of currents supplied to the electric motors), as will be discussed later, on the basis of primarily a desired gait generated by the gait generator 51, an actual inclination angle of the body 2 detected by the posture sensor 42 (an actual inclination angle relative to the vertical direction), actual rotational angles of the joints 7, 8 and 9 of the leg 3 detected by using encoders, which are not shown, an actual floor reaction force of each foot 6 detected by the six-axis force sensor 11, and data on the locking period (or the free period) determined by the solenoid switching valve controller 53. Then, the motor controller 52 outputs the generated torque commands to the motor driver circuit 43 to generate torques based on the torque commands at the electric motors through the intermediary of the motor driver circuit 43.

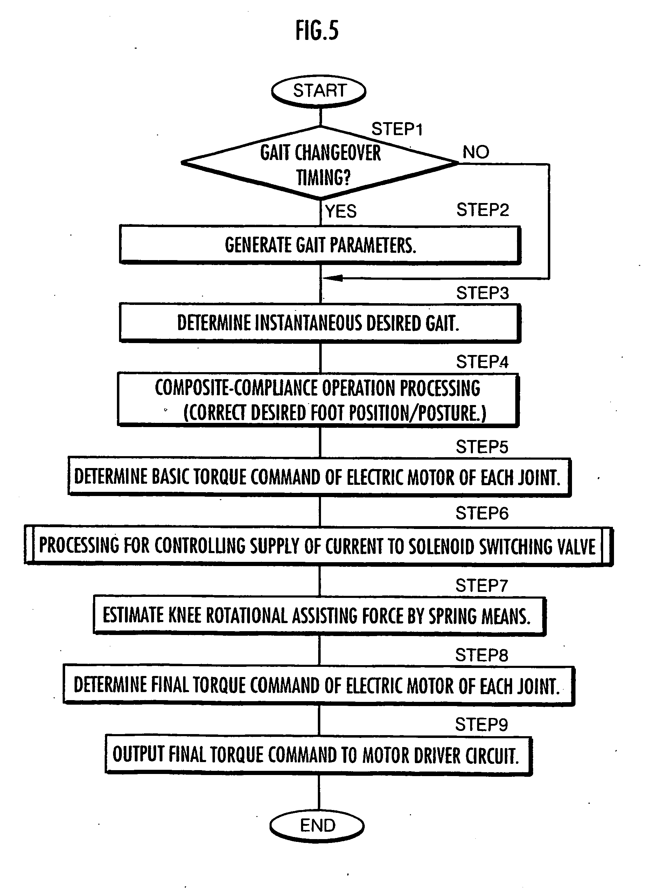

The operation of the system according to the illustrated arrangement will now be explained with reference to the flowchart of Fig. 5. The control unit 40 carries out predetermined initialization processing, such as the initialization of a timer that clocks time, and then carries out the processing indicated by the flowchart of Fig. 5 for each predetermined control cycle (e.g., 50 ms) that has been set in advance. More specifically, the control unit 40 first determines whether the robot 1 is having a gait change-over timing (STEP1). Here, to be specific, the gait change-over timing is the timing at which the supporting leg when the robot 1 travels switches from one leg 3 to the other leg 3. And, if it is determined in STEP1 that it is not the gait change-over timing, then the processing by the control unit 40 proceeds to the processing in STEP3, which will be described later.

If the determination result in STEP1 indicates a gait change-over timing, then the control unit 40 generates (updates) gait parameters that define a desired gait of the robot 1 by the gait generator 51 on the basis of an operation command of the robot 1 given from an outer source or preset moving plan data (STEP2). Here, the desired gait defined by the gait parameters generated by the gait generator 51 is a desired gait up to, for example, the change-over timing of the next time gait or a timing that is slightly ahead thereof. In this case, if, for example, an operation command to the effect that the robot 1 is to perform a running motion is given from an outer source or if there is a situation wherein the robot 1 is to perform a running motion based on a moving plan data of the robot 1, then a desired gait defined by the gait parameters generated by the gait generator 51 is a desired gait for the running motion of the robot 1 (a desired gait for implementing motions of the legs 3 and 3 in a pace that is similar to a pace of a human being when he/she runs).

Subsequently, the control unit 40 carries out the processing of STEP3 through 5 by the motor controller 52. The processing of STEP3 through 5 is the processing for determining the torque commands (hereinafter referred to as the basic torque commands) of the electric motors of the joints 7, 8 and 9 that are necessary for the motions of the robot 1 to follow the desired gait if a knee rotational assisting force is not applied to the knee joint 8 from the spring means 13 (if the solenoid switching valve 23 of the assist device 12 is in the valve-open state). Incidentally, the processing of STEP3 through 5 is explained in detail in Japanese Unexamined Patent Application Publication H11-300660 by the present applicant, so that the processing of STEP3 through 5 will be schematically explained below.

In STEP3, the control unit 40 determines an instantaneous desired gait on the basis of gait parameters currently being generated by the gait generator 51. This instantaneous desired gait is a desired gait for each control cycle of the processing by the control unit 40. As previously mentioned, to be more specific, the instantaneous desired gait is composed of desired body position/posture, desired foot position/posture, a desired total floor reaction force, and a desired ZMP in each control cycle. The processing in STEP3 further determines a desired floor reaction force of each leg 3 and the point of action of the desired floor reaction force for each control cycle on the basis of the desired foot position/posture, the desired total floor reaction force, the desired ZMP and the like.

In STEP4, the control unit 40 corrects the desired foot position/posture of the instantaneous desired gait by composite-compliance operation processing. More specifically, the composite-compliance operation processing determines a floor reaction force (moment) to be applied to the robot 1 in order to restore an actual inclination angle of the body 2 of the robot 1 (this being detected by the posture sensor 42) to a desired inclination angle determined by the desired body position/posture (to converge the difference between an actual inclination angle of the body 2 and a desired inclination angle to zero). Then, by using the resultant force of the determined floor reaction force (moment) and the desired total floor reaction force as the desired value of the total floor reaction force to be actually applied to the robot 1, the desired foot position/posture in each control cycle are corrected such that the resultant force of the actual floor reaction forces of the feet 6 detected by the six-axis force sensors 11 of the feet 6 follows the aforesaid desired value. The composite-compliance operation processing described above is for securing autonomous stability of a posture of the robot 1.

Then, in STEP5, the control unit 40 determines basic torque commands for the electric motors of the joints 7, 8 and 9 of the legs 3 of the robot 1. To be more specific, this processing determines the desired rotational angles of the joints 7, 8, and 9 of the legs 3 of the robot 1 by inverse kinematics arithmetic processing based on a model (rigid link model) of the robot 1 primarily from the desired body position/posture in an instantaneous desired gait and the desired foot position/posture corrected in STEP4 as described above. Then, the torque commands for the electric motors of the joints 7, 8 and 9 are determined such that the actual rotational angles of the joints 7, 8 and 9 (these are detected by encoders provided in the joints 7, 8 and 9, the encoders being not shown) follow the desired rotational angles.

In this case, for example, the torque command of the knee joint electric motor 10 of each leg 3 is determined according to Expression (1) given below from a difference $\Delta\theta$ between a desired rotational angle of the knee joint 8 (a desired value of a knee bending angle $\theta$) and an actual rotational angle of the knee joint 8 (a detected value of the knee bending angle $\theta$) and a torque Tff of the electric motor 10 (hereinafter referred to as the reference torque Tff) required to generate the desired floor reaction force relative to the leg 3.

$$\text{Basic torque command} = Kp \cdot \Delta\theta + Kv \cdot (d\Delta\theta/dt) + Tff \quad \ldots\ldots \quad (1)$$

The reference torque Tff used for the calculation of Expression (1) is determined by the inverse dynamics arithmetic processing based on a model (dynamics model) of the robot 1 from desired body position/posture, desired foot position/posture, a desired floor reaction force relative to the leg 3, the desired rotational angular accelerations of the joints 7, 8 and 9, and the like. Kp and Kv in Expression (1) denote gain coefficients established beforehand, and $d\Delta\theta/dt$ denotes a time differential value of the difference $\Delta\theta$.

Here, the first term and the second term of the right side of Expression (1) are feedback control terms based on the aforesaid difference $\Delta\theta$, while the third term of the right side is a feed-forward control term for compensating for an influence of a floor reaction force or an inertial force acting on the leg 3. Further, the second term of the right side, in particular, is a term that has a buffering function (damping function) for promptly attenuating a vibration relative to a desired value of the knee bending angle 6.

For the electric motors of the joints 7 and 9 in addition to the knee joint 8, their basic torque commands are determined in the same manner as described above. As previously explained, the basic torque commands thus determined are the torque commands for the electric motors of the joints 7, 8 and 9 that are necessary for motions of the robot 1 to follow the desired gaits in a state wherein the knee rotational assisting forces by the spring means 13 of the assist device 12 do not act on the knee joint 8.

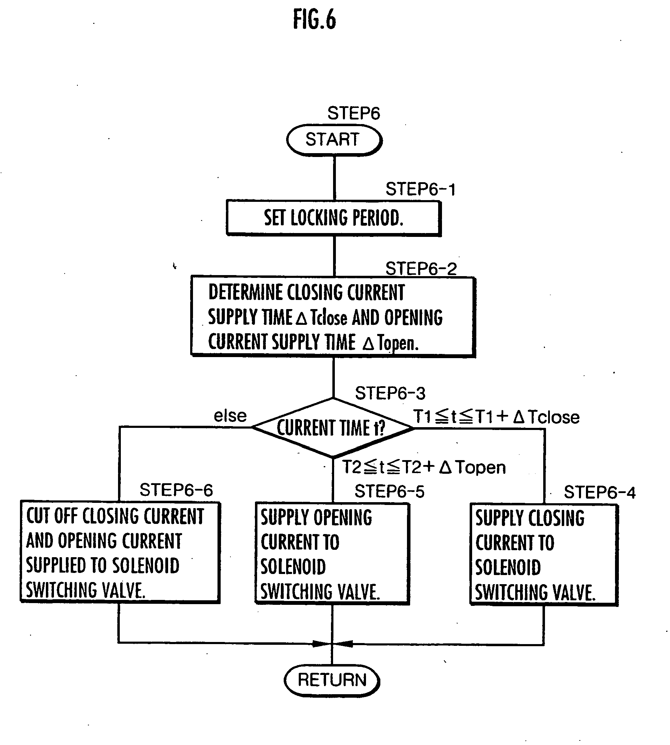

The control unit 40 then carries out the processing for controlling the supply of current to the solenoid switching valve 23 of the assist device 12 by the solenoid switching valve controller 53 in STEP6. This processing is executed by the subroutine processing shown by the flowchart of Fig. 6. More specifically, the solenoid switching valve controller 53 first sets the locking period, during which the solenoid switching valve 23 should be placed in the valve-closed state, on the basis of gait parameters currently set by the gait generator 51 (STEP6-1). In this case, according to the present arrangement, if the gait parameters are the gait parameters for causing the robot 1 to, for example, perform a normal walking motion, then the solenoid switching valve controller 53 places the solenoid switching valve 23 in the valve-open state throughout the entire period of the walking motion (no knee rotational assisting force by the spring means 13 being applied to the knee joint 8). In this case, therefore, the locking period is not set.

Meanwhile, if the aforesaid gait parameters are the gait parameters for causing the robot 1 to, for example, perform a running motion (a running motion similar to a running motion of a human being), then the locking period is set such that the solenoid switching valve 23 is placed in the valve-closed state in a predetermined period of the gait of the robot 1, as explained below.

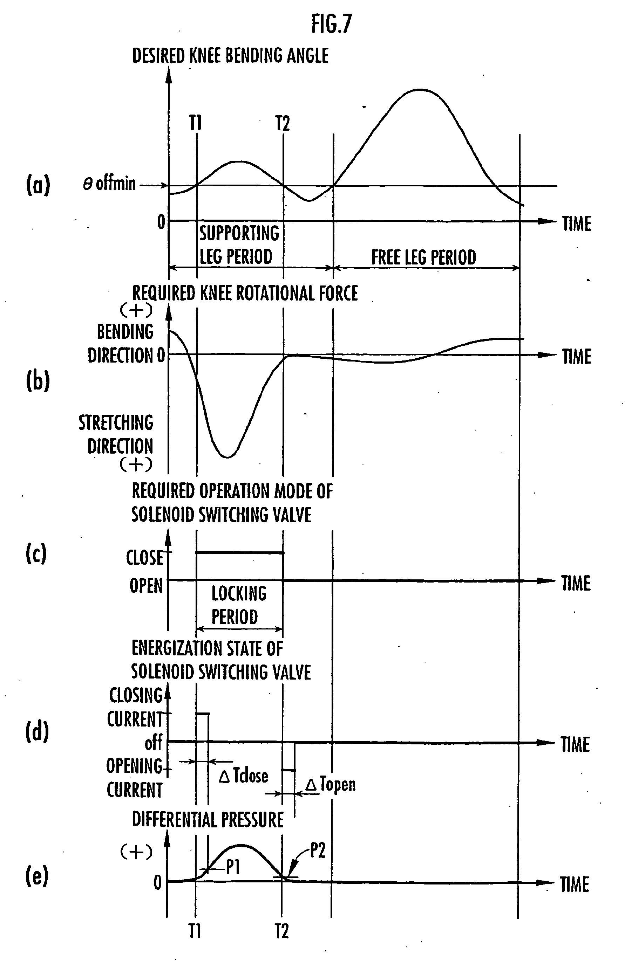

Here, before specifically explaining the setting of the locking period, a desired knee bending angle determined by a desired gait in the running motion of the robot 1 and a rotational force to be applied to the knee joint 8 on the basis of the desired knee bending angle (hereinafter referred to as the required knee rotational force) will be explained with reference to Fig. 7. Fig. 7(a) illustrates time-dependent changes in a desired knee bending angle of the knee joint 8 of either one of the legs 3 and 3 in the running motion of the robot 1 (a running motion in a foot moving form similar to that of a normal running motion of a human being), and Fig. 7(b) illustrates time-dependent changes in the required knee rotational force based on the desired knee bending angle shown in Fig. 7(a). Fig. 7(c) shows a timing chart of a required operation mode of the solenoid switching valve 23, Fig. 7(d) shows a timing chart of the supply of current to the solenoid switching valve 23, and Fig. 7(e) illustrates time-dependent changes in the differential pressure between the two air chambers 16 and 17 of the spring means 13.

When implementing the running motion of the robot 1 in the form similar to that of the normal running motion of a human being, the desired knee bending angle increases (the bending degree of the leg 3 at the knee joint 8 increases) in the first half of the supporting leg period during which the leg 3 is in contact with a floor, as shown in Fig. 7(a). Then, in the second half of the supporting leg period, the desired knee bending angle decreases (the bending degree of the leg 3 at the knee joint 8 decreases) until immediately before the supporting leg period ends. Further, the desired knee bending angle continues to increase from the point immediately before the end of the supporting leg period to the first half of a free leg period (the period during which the foot 6 of the leg 3 is apart from the floor), and then, in the second half of the free leg period, the desired knee bending angle continues to decrease until immediately before the free leg period ends. Immediately before the end of the free leg period, the desired knee bending angle slightly increases. Hence, the desired knee bending angle in the running motion takes a maximum value at a midpoint of the supporting leg period and a midpoint of the free leg period and takes a minimum value immediately before the end of the supporting leg period.

As shown in Fig. 7(b), a required knee rotational force (a rotational force in the direction in which the leg 3 bends taking a positive value, while a rotational force in the direction in which the leg 3 stretches taking a negative value) considerably decreases from a positive rotational force to a negative rotational force (the rotational force considerably increases in the direction in which the leg 3 stretches) in the first half of the supporting leg period (the period during which the desired knee bending angle increases as a whole), while it increases to a substantially zero rotational force until immediately before the supporting leg period ends (the period during which the desired knee bending angle decreases as a whole) in the second half of the supporting leg period. Then, the required knee rotational force slowly decreases to a slightly negative value from the point immediately before the end of the supporting leg period to the first half of the free leg period, and then the required knee rotational force slowly increases from a negative value to a positive value in the second half of the free leg period. Thus, the required knee rotational force in the running motion increases in the direction in which the leg 3 stretches especially in the supporting leg period and the required knee rotational force in the stretching direction reaches its maximum value substantially at the midpoint of the supporting leg period (this point generally coinciding with a point at which the knee bending angle reaches a maximum value).

According to the present arrangement, the characteristics of a desired knee bending angle and a required knee rotational force in the running motion of the robot 1 described above are taken into account, and basically, of the supporting leg period of the leg 3, the period during which the required knee rotational force increases in the direction in which the leg 3 stretches (e.g., the period from time T1 to time T2 in Fig. 7) is set as the locking period. To be more specific, the locking period is a period of the supporting leg period during which the required knee rotational force bulges in the direction in which the leg 3 stretches, or a period thereof during which the knee bending angle bulges in the direction in which it increases. And in this locking period, control is conducted so as to place the solenoid switching valve 23 in the valve-closed state, as shown in the timing chart of Fig. 7(c), thereby causing the knee rotational assisting force by the spring means 13 of the assist device 12 to act on the knee joint 8.

Meanwhile, if the locking period is set as described above and the solenoid switching valve 23 is placed in the valve-closed state in this locking period, then the differential pressure between the two air chambers 16 and 17 of the spring means 13 (Pressure of the air chamber 17 - Pressure of the air chamber 16) increases as the knee bending angle increases from the start (time T1) of the locking period and decreases until the end (time T2) of the locking period as the knee bending angle decreases thereafter, as shown in Fig. 7(e). And, according to the present arrangement, the air chambers 16 and 17 are in communication with the passages 30 and 31, respectively, of the solenoid switching valve 23, as previously described; therefore, the differential pressure acts on the valve element 33 of the solenoid switching valve 23 in the valve closing direction thereof. Accordingly, in order to securely open the solenoid switching valve 23 (change-over from the valve-closed state to the valve-open state) at the end of the locking period, it is required that the differential pressure be dropped to a certain differential pressure value P2 or less. The differential pressure value P2 is the maximum value of a differential pressure value at which a driving force acting on the plunger 35 in the direction in which the valve element 33 opens overcomes a driving force attributable to a differential pressure of the differential pressure value P2 in the direction in which the valve element 33 closes when the opening current is supplied to the solenoid 39 of the solenoid switching valve 23 (hereinafter referred to as the valve-openable permissible differential pressure value P2).

Taking the above into account, the locking period is set, for example, as follows in the aforesaid STEP6-1.

If the gait parameters currently set by the gait generator 51 are the gait parameters for a running motion of the robot 1, then the solenoid switching valve controller 53 first determines a desired knee bending angle in a supporting leg period of the leg 3 (specifically, a time series of time-dependent changes in the desired knee bending angle in a supporting leg period) on the basis of the gait parameters. Then, the solenoid switching valve controller 53 determines a desired knee bending angle θoffmin at the start of the locking period, that is, a desired value θoffmin of the valve closing start knee bending angle (hereinafter referred to as the valve closing start desired knee bending angle θoffmin), and sets a period in which the desired knee bending angle becomes θoffmin or more (the period from time T1 to time T2 in Fig. 7) in the supporting leg period as the locking period. Incidentally, the locking period end time T2 is the time at which the desired knee bending angle goes back to θffmin after it increases from the valve closing start desired knee bending angle θoffmin.

Here, θoffmin is a value close to a minimum value of a desired knee bending angle in the supporting leg period, and it is determined such that, after the supporting leg period starts, it takes a value in the vicinity of a value of the knee bending angle immediately after a required knee rotational force changes from a value in the bending direction (positive value) to a value in the stretching direction (negative value), and a differential pressure when the desired knee bending angle decreases to θoffmin at the end of the locking period becomes the valve-openable permissible differential pressure value P2 or less. The differential pressure between the air chambers 16 and 17 is based on a knee bending angle, so that determining beforehand the correlation between, for example, knee bending angles and differential pressures makes it possible to determine θoffmin on the basis of the correlation. In the present arrangement, the desired knee bending angles at the start and the end of the locking period have been set to take the same value (= valve closing start desired knee bending angle θoffmin); however, it is not required to always set the locking period such that they take the same value. The desired knee bending angle θ at the end of a locking period may be slightly different from the desired knee bending angle θ at the start of a locking period if a differential pressure is the valve-openable upper limit differential pressure value P2 or less.

Subsequently, in STEP6-2, the solenoid switching valve controller 53 determines a closing current supply time ΔTclose (refer to Fig. 7(d)), which is the time during which the closing current should be supplied to the solenoid 39 of the solenoid switching valve 23 to close the solenoid switching valve 23 at the start of the locking period (changeover from the valve-open state to the valve-closed state), and an opening current supply time ΔTopen (refer to Fig. 7(d)), which is the time during which the opening current should be supplied to the solenoid 39 of the solenoid switching valve 23 to open the solenoid switching valve 23 at the end of the locking period (changeover from the valve-closed state to the valve-open state). These closing current supply time ΔTclose and the opening current supply time ΔTopen are determined to be predetermined times that are set beforehand so that, for example, the solenoid switching valve 23 can be securely closed and opened. In the present arrangement, the valve-closed state after the solenoid switching valve 23 is closed is maintained by a differential pressure between the air chambers 16 and 17. Hence, it is desirable to set the closing current supply time ΔTclose to the time by which the differential pressure will have increased to a differential pressure that allows the solenoid switching valve 23 to be securely held in the valve-closed state when the closing current supplied to the solenoid 39 is stopped (a differential pressure value P1 in Fig. 7(e)). In this case, a timing at which the differential pressure rises to the differential pressure value P1, which allows the solenoid switching valve 23 to be securely held in the valve-closed state, is determined on the basis of, for example, a desired knee bending angle, and then the time from the start of the locking period to that timing may be determined as the closing current supply time.

Subsequently, it is determined in STEP6-3 whether current time t is T1≤t<T1+ΔTclose or T2≤t<T2+ΔTopen or other time. And, if it is T1≤t<T1+ΔTclose, then the solenoid switching valve controller 53 supplies the closing current to the solenoid 39 of the solenoid switching valve 23 (STEP6-4). This causes the closing current to be supplied to the solenoid 39 for the time of ΔTclose from time T1 at which the locking period starts, thereby closing the solenoid switching valve 23. If it is T2≤t<T2+ΔTopen, then the solenoid switching valve controller 53 supplies the opening current to the solenoid 39 of the solenoid switching valve 23 (STEP6-5). This causes the opening current to be supplied to the solenoid 39 for the time of ΔTopen from time T2 at which the locking period ends, thereby opening the solenoid switching valve 23. Further, if current time t is neither T1≤t<T1+ΔTclose nor T2≤t<T2+ΔTopen, then the solenoid switching valve controller 53 cuts off the supply of the closing current and the opening current to the solenoid 39 of the solenoid switching valve 23 (STEP6-6).

The above describes the detailed processing in STEP6. Thus, according to the present arrangement, the closing current is temporarily supplied to the solenoid switching valve 23 at the start of the locking period to close the solenoid switching valve 23, and the after the supply of the closing current is stopped, the aforesaid differential pressure holds the solenoid switching valve 23 in the valve-closed state. Then, at the end of the locking period, the opening current is temporarily supplied to the solenoid switching valve 23 to open the solenoid switching valve 23. After the supply of the opening current is stopped, the magnetic force of the permanent magnet 38 holds the solenoid switching valve 23 in the valve-open state.

Returning to the explanation of the flowchart of Fig. 6, the control unit 40 estimates a knee rotational assisting force (specifically, a knee rotational assisting force at each control cycle) by the spring means 13 of the assist device 12 after carrying out the processing in STEP 6 as described above (STEP7). The estimated value of the knee rotational assisting force is used by the motor controller 52 to determine a final torque command for the knee joint electric motor 10, and it is determined by the motor controller 52 as, for example, described below. The motor controller 52 stores and retains, as the valve closing start knee bending angle, a desired knee bending angle at the start of the locking period (= θoffmin) or the knee bending angle θ detected by an encoder, not shown, at the start of the locking period. The knee bending angle to be stored and retained as the valve closing start knee bending angle may be a knee bending angle that is determined on the basis of desired foot position/posture that have been corrected by the aforesaid composite-compliance operation processing.

Subsequently, the motor controller 52 estimates the knee rotational assisting force supplied by the spring means 13. In this case, according to the present arrangement, data (a data table, an arithmetic expression, or the like) representing the characteristics of the knee rotational assisting force of the spring means 15 indicated by the solid lines a and b in Fig. 2 is stored and retained beforehand in a memory, which is not shown. In the locking period during which the solenoid switching valve 23 is placed in the valve-closed state, the knee rotational assisting force by the spring means 13 is estimated on the basis of the valve closing start knee bending angle stored and retained as described above, the detection value (or the desired value) of a current knee bending angle θ, and the aforesaid characteristics data on knee rotational assisting forces. Referring to, for example, Fig. 2, if the valve closing start knee bending angle is "θ2" and the current knee bending angle is θk, then the estimated value of the knee rotational assisting force is "Mk". In a free period, the knee rotational assisting force is "0". Incidentally, the knee rotational assisting force can be directly detected by using a force sensor or the like.

After estimating the knee rotational assisting force in STEP7 as described above, the control unit 40 determines a final torque command as the final torque command for each control cycle of the electric motors of the joints 7, 8, and 9 of the leg 3 by the motor controller 52 (STEP8). In this case, the final torque command for the knee joint electric motor 10 is determined by subtracting the knee rotational assisting force determined in the aforesaid STEP7 from the basic torque command (the torque to be generated in the knee joint 8 on the basis of a desired gait when it is assumed that the knee rotational assisting force is "0") determined according to Expression (1) in the aforesaid STEP5. In other words, the final torque command for the knee joint electric motor 10 is generated such that the sum of the final torque command for the knee joint electric motor 10 (the command value of the torque to be actually produced in the knee joint electric motor 10) and a knee rotational assisting force equals a basic torque command. In the present arrangement, the basic torque command is directly used as the final torque command for the electric motors of the joints 7 and 9 except the knee joint 8.

Subsequently, the control unit 40 outputs the final torque command determined as described above to the motor driver circuit 43 (STEP9), thus terminating the processing for each control cycle. Based on the output of the final torque command, the electric motors of the joints 7, 8, and 9 are energized to control the rotational angles of the electric motors, i.e., the rotational angles of the joints 7, 8, and 9 so that they follow the predetermined rotational angles determined on the basis of the aforesaid desired body position/posture or desired foot position/posture (that have been corrected by the aforesaid composite-compliance operation processing). Thus, the robot 1 travels according to the desired gait defined by a gait parameter.

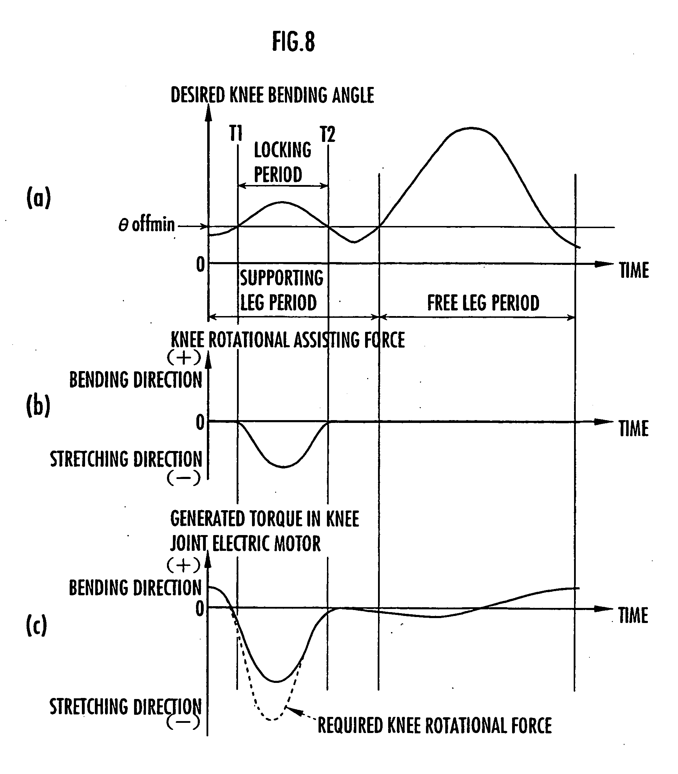

In the system according to the present arrangement, as shown in Fig. 8(a), in the supporting leg period of each leg 3, the period during which a desired knee bending angle is the valve closing start desired knee bending angle θoffmin or more is determined as the locking period, and the solenoid switching valve 23 is placed in the valve-closed state in the locking period. Incidentally, Fig. 8(a) is similar to Fig. 7(a) and it illustrates a time-dependent change in a desired knee bending angle when the robot 1 is in a running operation mode. Fig. 8(b) illustrates a time-dependent change in a knee rotational assisting force produced by the spring means 13 on the basis of a change in the desired knee bending angle shown in Fig. 8(a) (or a change in an actual knee bending angle that follows the desired knee bending angle). Fig. 8(c) illustrates, by the solid line, a time-dependent change in torque generated in the knee joint electric motor 10 on the basis of a change in the desired knee bending angle shown in Fig. 8(a) (or a change in an actual knee bending angle that follows the desired knee bending angle). In this case, Fig. 8(c) also illustrates, by the dashed line, a time-dependent change in the aforesaid required knee rotational force (this being the same as that in Fig. 7(b)).

When the solenoid switching valve 23 is closed in the locking period as described above, the knee rotational assisting force produced by the spring means 13 increases in the direction in which the leg 3 stretches as the knee bending angle increases from the valve closing start desired knee bending angle θoffmin in the locking period, and then it decreases in the direction in which the leg 3 stretches as the knee bending angle decreases to the valve closing start desired knee bending angle θoffmin, as shown in Fig. 8(b). At the start and the end of the locking period and during a period other than the locking period, the knee rotational assisting force produced by the spring means 13 is substantially zero. Hence, as shown in Fig. 8(c), in the period during which the required knee rotational force increases in the direction in which the leg 3 stretches (the locking period), the torque to be generated in the knee joint electric motor 10 is a relatively small torque, which is obtained by subtracting a knee rotational assisting force from the required knee rotational force. As a result, the torque generated by the knee joint electric motor 10 that is required in the entire period when the robot 1 is in the running operation mode remains relatively small, thus permitting reduced power consumption or a capacity of the knee joint electric motor 10.

Further, as shown in Fig. 7(d), the solenoid switching valve 23 is closed and opened by temporarily energizing it for the closing current supply time ΔTclose and the opening current supply time ΔTopen, respectively, at the start and the end of the locking period. Then, after the valve closing operation of the solenoid switching valve 23 in the locking period, the solenoid switching valve 23 is maintained in the valve-closed state by a differential pressure between the air chambers 16 and 17 of the spring means 13 after the supply of the closing current to the solenoid 39 of the solenoid switching valve 23 is cut off. After the valve opening operation of the solenoid switching valve 23, the solenoid switching valve 23 is maintained in the valve-open state by the magnetic force of the permanent magnet 38 after the supply of the opening current to the solenoid 39 of the solenoid switching valve 23 is cut off. This allows the construction of the solenoid switching valve 23 to be smaller and simpler, permitting reduced power consumption of the solenoid switching valve 23. As a result, the power consumption of the robot 1 can be reduced.

Further, in the present arrangement, the knee bending angles at the start and the end of the locking period when the robot 1 is in the running operation mode are the same, providing the following advantage. Since the knee bending angles at the start and the end of the locking period are the same, the knee rotational assisting force of the spring means 13 is substantially "0" at the start of the locking period, of course, and also at the end thereof. This prevents a knee rotational assisting force of the spring means 13 from discontinuously changing when the solenoid switching valve 23 is changed from the valve-closed state to the valve-open state. As a result, when the solenoid switching valve 23 is changed from the valve-closed state to the valve-open state, the behaviors of the robot 1 will not be awkward, allowing the operations of the robot 1 to be smoothly performed. In particular, the solenoid switching valve 23 is changed from the valve-closed state to the valve-open state in a state wherein the spring means 13 has sufficiently released elastic energy, thus preventing the elastic energy accumulated in the spring means 13 from being consumed by being wastefully converted into heat energy. This permits higher efficiency of energy use of the robot 1.

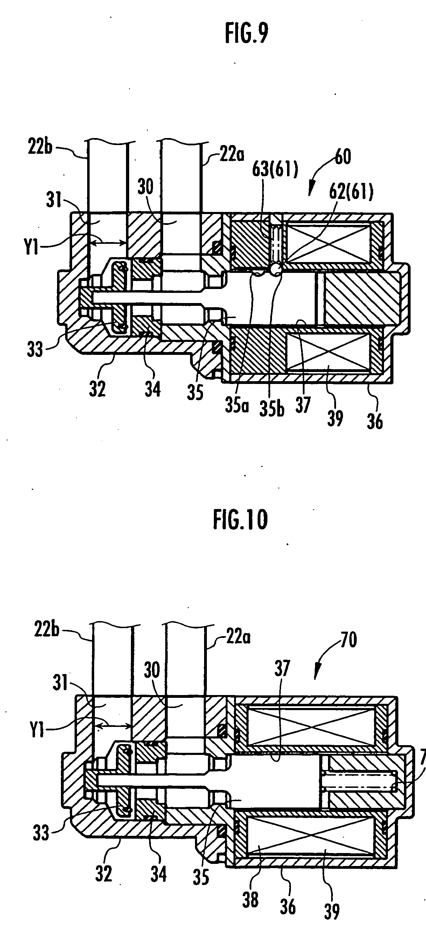

A second arrangement will now be explained with reference to Fig. 9, also for the purpose of explanation. The second arrangement differs from the first arrangement only in a part of the construction of a solenoid switching valve. Therefore, in the explanation of the second arrangement, the same reference numerals as those in the first arrangement will be used for the same components as those in the first arrangement, and detailed explanation thereof will be omitted.

Fig. 9 is a sectional view of a solenoid switching valve 60 in the second arrangement. The solenoid switching valve 60 differs from the solenoid switching valve 23 of the first arrangement only in a part of the construction in a drive case 36. In place of the permanent magnet 38 of the solenoid switching valve 23, a locking mechanism 61 for locking a plunger 35 at an valve-open position of the valve element 33 (the position shown in Fig. 9) and at a valve-closed position (a state wherein the valve element 33 abuts against a valve seat 34) is provided in the drive case 36. The locking mechanism 61 is a means for implementing the self-holding feature of the solenoid switching valve 60, and it is equipped with a spherical component 62 provided such that it is free to move forward and backward with respect to the outer peripheral surface of the plunger 35 in an insertion hole 37 (free to move into and out of the insertion hole 37) in the direction orthogonal to the axial direction (movable direction) of the plunger 35, and a spring 63 (a coil spring in this example) for urging the spherical component 62 in the advancing direction (the direction toward the plunger 35).

A pair of semispherical recesses 35a and 35b to which a half portion of the spherical component 62 can be fitted is formed on the outer peripheral surface of the plunger 35 in the insertion hole 37, an interval being provided therebetween in the axial direction of the plunger 35. Of these recesses 35a and 35b, the recess 35a is provided such that the half portion of the spherical component 62 fits therein by an urging force of the spring 63 when the plunger 35 is at the position corresponding to the valve-open position of the valve element 33 (the position shown in Fig. 9), so that the fitting locks the plunger 35 to hold the valve element 33 in the valve-open position. Further, the recess 35b is provided such that the half portion of the spherical component 62 fits therein by an urging force of the spring 63 when the valve element 33 is at the position corresponding to the valve-closed position of the valve element 33, so that the fitting locks the plunger 35 to hold the valve element 33 in the valve-closed position. Thus, the solenoid switching valve 60 has the self-holding feature for holding the valve element 33 at the valve-open position and the valve-closed position by the locking mechanism 61. The urging force of the spring 63 of the locking mechanism 61 is set such that, when the closing current or the opening current is supplied to the solenoid 39 at the valve-open position or the valve-closed position of the valve element 33, an electromagnetic force produced by the solenoid 39 causes the spherical component 62 to disengage from the recess 35a or 35b so as to allow the plunger 35 to move in the axial direction.

The construction is the same as that of the first arrangement except for the part explained above.

In the second arrangement described above, the control unit 40 sets the locking period in a supporting leg period of each leg 3 when carrying out the same processing as the processing in the first arrangement (Fig. 5 and Fig. 6) to perform the running motion of the robot 1. And, in this locking period, the solenoid switching valve 60 is closed so as to produce a knee rotational assisting force by the spring means 13.

The second arrangement provides the same advantages as those of the aforesaid first arrangement. In this case, according to the second arrangement, the solenoid switching valve 60 is maintained in the valve-open state or the valve-closed state by the locking mechanism 61 after the supply of the opening current or the closing current to the solenoid 39 is stopped. Thus, the closing current supply time ΔTclose at the start of the locking period, in particular, can be made shorter than that in the aforesaid first arrangement, permitting further suppression of power consumption of the solenoid switching valve 23.

According to the second arrangement, the valve element 33 has been held at the valve-closed position and the valve-open position by the locking mechanism 61 in the valve-closed state and the valve-open state, respectively, of the solenoid switching valve 60. Alternatively, however, the recess 35a of the locking mechanism 61, for example, may be omitted and the valve element 33 may be held in the valve-open position by a locking mechanism only in the valve-open state of the solenoid switching valve 60. Further, the valve element 33 may be held in the valve-closed position by a differential pressure between the air chambers 16 and 17, as in the aforesaid first arrangement.

An embodiment of the present invention will now be explained with reference to Fig. 10 to Fig. 12. The illustrated embodiment of the invention differs from the first arrangement described for explanatory purposes only in a part of the construction of the solenoid switching valve and the processing for controlling the current supply to a solenoid switching valve by a control unit. Hence, in the explanation of the present embodiment, the like components as those of the first arrangement described for explanatory purposes in Figs 1 to 8 will be assigned the like reference numerals and detailed explanation thereof will be omitted.

Fig. 10 is a sectional view of a solenoid switching valve 70 in the present embodiment. The solenoid switching valve 70 differs from the solenoid switching valve 23 of the first arrangement only partly in the construction of the drive case 36; it is not provided with the permanent magnet 38 of the solenoid switching valve 23, but provided with a spring 71 (a coil spring in this example), which is an urging means for urging a plunger 35 toward the valve-open position of a valve element 33. In this case, the spring 71 is installed in an insertion hole 37 of the drive case 36 between the bottom portion thereof and the end surface of the plunger 35 (the end surface at the opposite side from the valve element 33) to urge the plunger 35 toward the valve-open position of the valve element 33 (leftward in Fig. 10). The construction other than the one explained above is the same as that of the first arrangement.

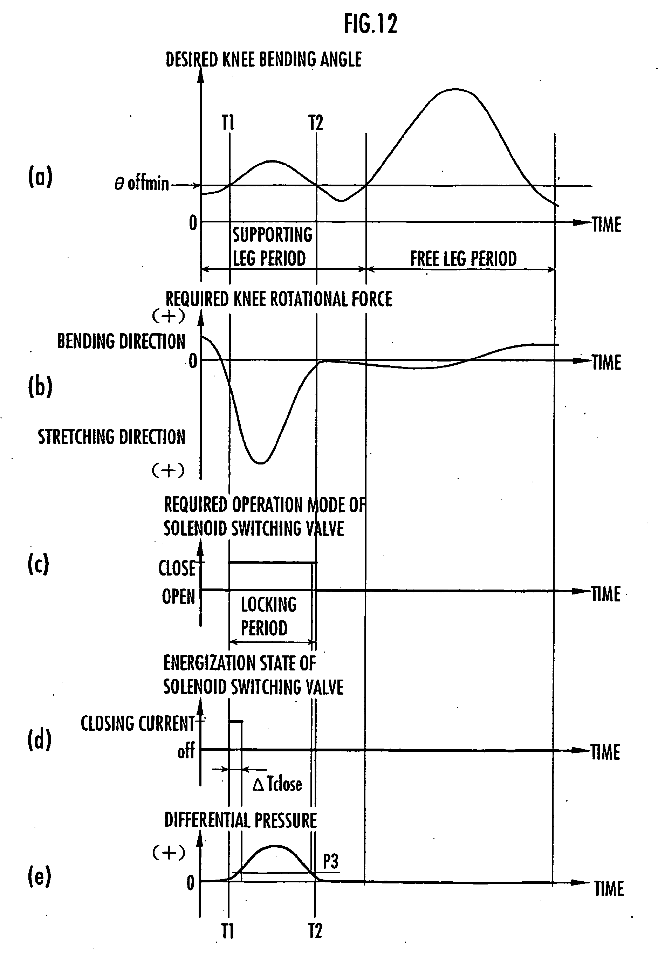

Here, in the solenoid switching valve 70 having the construction described above, when a closing current is supplied to a solenoid 39, an electromagnetic force produced by the solenoid 39 causes the plunger 35 to retreat away from a valve element case 32 against an urging force of the spring 71, thereby closing the valve element 33. In this case, if the differential pressure between air chambers 16 and 17 of the aforesaid spring means 13 is zero or near zero, then the supply of the closing current to the solenoid 39 must be continued to hold the valve element 33 in the valve-closed position; however, when the differential pressure increases in the direction in which the valve element 33 closes and exceeds a certain differential pressure value P3 (refer to Fig. 12(e)), the differential pressure makes it possible to hold the valve element 33 in the valve-closed position against an urging force of the spring 71 even after the supply of the closing current to the solenoid 39 is cut off. Further, if the differential pressure drops to the aforesaid differential pressure value P3 or less, then the valve element 33 will be automatically reset to the valve-open position by an urging force of the spring 71 while the supply of the current to the solenoid 39 has been cut off. Hereinafter, the differential pressure value P3 will be referred to as the valve opening reset differential pressure value P3.

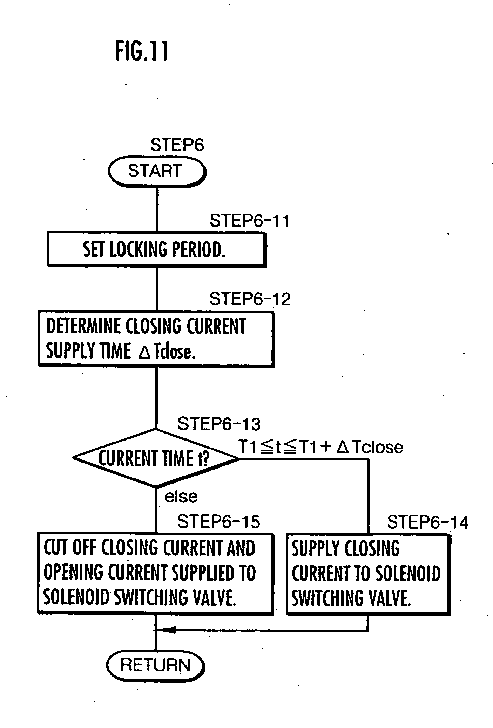

Subsequently, an operation of a system according to the present embodiment will be explained. In the present embodiment, a control unit 40 carries out the control processing shown by the flowchart of Fig. 5, as in the first arrangement. In this case, the present embodiment differs from the first arrangement only in the subroutine processing (the processing for controlling the supply of current to the solenoid switching valve 70) in STEP6. The subroutine processing is carried out as shown by the flowchart of Fig. 11.

As in the first arrangement, a solenoid switching valve controller 53 first sets a locking period, during which the solenoid switching valve 70 should be placed in the valve-closed state, on the basis of a gait parameter currently set by a gait generator 51 (STEP6-11). Specifically, if the gait parameters currently set by the gait generator 51 are gait parameters for a running motion of a robot 1, then the solenoid switching valve controller 53 determines a valve closing start desired knee bending angle θoffmin, which is a desired knee bending angle at the start of a locking period, as shown in Fig. 12(a), and sets the period during which the desired knee bending angle is θoffmin or more in a supporting leg period (the period from time T1 to time T2 in Fig. 12) as the locking period, as in the first arrangement. In this case, θoffmin takes a value in the vicinity of a minimum value of the desired knee bending angle in the supporting leg period, and it is determined such that it takes a value in the vicinity of the value of the knee bending angle immediately after a required knee rotational force changes from a value (a positive value) in a bending direction to a value (a negative value) in a stretching direction after the supporting leg period starts, and that the differential pressure between air chambers 16 and 17 when the desired knee bending angle upon the end of the locking period reduces to θoffmin becomes the aforesaid valve opening reset differential pressure value P3 or less (the differential pressure becomes slightly smaller than P3 in the present embodiment).

Fig. 12(a) is identical to Fig. 7(a) and it illustrates a time-dependent change in a desired knee bending angle in the running motion of the robot 1. Similarly, Fig. 12(b) is identical to Fig. 7(b) and it illustrates a time-dependent change in a required knee rotational assisting force corresponding to a change in the desired knee bending angle shown in Fig. 12(a). Further, Fig. 12(c) is a timing chart of a required operation mode of the solenoid switching valve 70, Fig. 12(d) is a timing chart showing the energization of the solenoid switching valve 70, and Fig. 12(e) illustrates a time-dependent change in the differential pressure between the two air chambers 16 and 17 of the spring means 13.

Subsequently, the solenoid switching valve controller 53 determines a closing current supply time ΔTclose (refer to Fig. 12(d)) during which a closing current should be supplied to the solenoid 39 of the solenoid switching valve 70 in order to close the solenoid switching valve 70 (changeover from an valve-open state to a valve-closed state) at the start of the locking period.

In this case, a timing at which the differential pressure between the air chambers 16 and 17 of the spring means 13 surely exceeds the aforesaid opening valve reset differential pressure value P3 is determined on the basis of, for example, a desired knee bending angle, and the time from the start of the locking period to that timing is determined as the closing current supply time ΔTclose. In this case, the relationship between a desired knee bending angle and a differential pressure is stored and retained beforehand in the control unit 40, the desired knee bending angle at the start of the locking period being a parameter, and based on this stored and retained relationship, the timing at which the differential pressure securely exceeds the opening valve reset differential pressure value P3 is determined.

Subsequently, it is determined in STEP6-3 whether current time t is T1≤t<T1+ΔTclose. And, if it is T1≤t<T1+ΔTclose, then the solenoid switching valve controller 53 supplies the closing current to the solenoid 39 of the solenoid switching valve 70 (STEP6-14). This causes the closing current to be supplied to the solenoid 39 for the duration from the start time T1 of the locking period to ΔTclose, thereby closing the solenoid switching valve 70. And, if the current time t is not T1≤t<T1+ΔTclose, then the solenoid switching valve controller 53 cuts off the supply of the closing current to the solenoid 39 of the solenoid switching valve 70 (STEP6-15). In the present embodiment, no current is supplied for opening the solenoid switching valve 70.

The above has explained the details of the processing in STEP6 in the present embodiment. Thus, according to the present embodiment, the solenoid switching valve 70 is closed by temporarily supplying the closing current to the solenoid switching valve 70 for the closing current supply time ΔTclose at the start of the locking period, and after the supply of the closing current is stopped, the aforesaid differential pressure retains the solenoid switching valve 70 in the valve-closed state against an urging force of the spring 71. Then, in the vicinity of time T2 at which the locking period ends, the differential pressure drops to the opening valve reset differential pressure value P3 or less. This automatically opens the solenoid switching valve 70 by an urging force of the spring 71 and retains the valve-open state.

It is needless to say that the present embodiment also provides the same advantages as those of the first arrangement. In addition, according to the present embodiment, the closing current is temporarily supplied to the solenoid 39 of the solenoid switching valve 70 only at the start of the locking period, thus permitting a further reduction in the power consumed by the solenoid switching valve 70.

A few modifications of the explanatory arrangements and embodiment of the invention explained above will now be explained. In the first and the second arrangements, the timing at which the closing current or the opening current supplied to the solenoid switching valve 23 or 60 has been determined on the basis of time t; alternatively, however, it may be determined on the basis of a knee bending angle of an instantaneous desired gait or a detection value of a knee bending angle. As an alternative, the values of the torques (the values of the required knee rotational forces) to be generated at a knee joint 8 at the start timing and the end timing, respectively, of the locking period may be determined, and the start timing and the end timing of the locking period may be determined on the basis of the aforesaid basic torque or the detection value of an actual torque acting on the knee joint 8. Further, in determining the timing at which the supply of the closing current to the solenoid switching valve 23 or 60 is ended, the value of the knee bending angle at the current supply end timing may be determined beforehand and the closing current supply end timing may be determined on the basis of a knee bending angle of an instantaneous desired gait or the detection value of a knee bending angle. Alternatively, the value of the aforesaid differential pressure at the closing current supply end timing may be determined (e.g., P1 in Fig. 7(e) may be determined), and the closing current supply end timing may be determined on the basis of an estimated value of a differential pressure estimated from a desired knee bending angle or the like or the detection value of a differential pressure by an appropriate pressure sensor.

Further, in the aforesaid embodiment of the invention, the locking period has been set; alternatively, however, only the start timing and the end timing of the supply of the closing current to the solenoid switching valve 70 may be determined. And, as in the modifications related to the first and the second arrangements, the closing current supply start timing (the start timing of the locking period) may be determined on the basis of a knee bending angle of an instantaneous desired gait or the detection value of a knee bending angle or on the basis of the aforesaid basic torque or the detection value of an actual torque acting on the knee joint 8. Further, the timing at which the supply of the closing current to the solenoid switching valve 70 is ended may be determined on the basis of a knee bending angle of an instantaneous desired gait or the detection value of a knee bending angle, or it may be determined on the basis of an estimated value or a detection value of the aforesaid differential pressure, as in the modifications related to the first and the second arrangements.

In either case, the locking period during which the solenoid switching valve 23, 60 or 70 should be closed is desirably set to a period of a supporting leg period in which a required knee rotational force bulges in the direction in which a leg 3 stretches or a period in which a knee bending angle bulges in its increasing direction, and the knee bending angles at the start and the end of the period become the same or substantially the same. Further, the time for supplying the closing current to the solenoid switching valve 23, 60 or 70 is desirably set to a shortest possible time as long as the solenoid switching valve can be securely closed. In other words, the supply of the closing current is desirably cut off in a state wherein the solenoid switching valve can be held in the valve-closed state by the differential pressure.

Further, in the embodiment described above, the air chambers 16 and 17 of the spring means 13 have been hermetically sealed in the state wherein the solenoid switching valve 23, 60 or 70 is closed; there is, however, the following alternative. Either the air chamber 16 or 17 may be opened to the air, while the solenoid switching valve may be provided in a communication tube (a gas passage) for providing communication between the other air chamber 17 or 16 and the atmosphere outside, so that only the other air chamber 17 or 16 is hermetically sealed in the state wherein the solenoid switching valve is closed. Further, as shown in Fig. 22 of the aforesaid Japanese Unexamined Patent Application Publication No. 2003-103480, the solenoid switching valve may be provided in a communication tube (a gas passage) that provides communication between the aforesaid other air chamber 17 or 16 and an accumulator (the accumulator being filled with a pressurized gas) provided on an appropriate place (the thigh 4 or the like of the robot 1) outside thereof. This arrangement makes it possible to enhance a knee rotational assisting force produced by the spring means in the valve-closed state of the solenoid switching valve. In a case where the accumulator is provided, a non-zero knee rotational assisting force is produced as the volumes of the air chambers of the spring means change as a knee bends or stretches in the valve-open state (a period other than the locking period) of the solenoid switching valve, and the maximum value of the knee rotational assisting force will be sufficiently smaller than the knee rotational assisting force generated by the spring means in the locking period during which the solenoid switching valve is closed.

Further, in the embodiment described above, the air chambers 16 and 17 have been formed of the cylinder 14 and the piston 15; alternatively, however, the air chambers may be formed of appropriate bag members as long as their volumes change as a knee bends or stretches.

Further, the embodiment described above has shown an example in which the present invention has been applied to the bipedal mobile robot; however, the present invention can be of course applied to a robot having two or more legs.

Further, in the embodiment described above, the assist device 12 has been provided only on the knee joints 8; however, assist devices similar to the assist device 12 may be provided also on the hip joints 7 or the ankle joints 9.

Further, in the embodiment described above, the joints 8 provided with the assist devices 12 are joints that allow the legs 3 to bend and stretch. Alternatively, however, in a legged mobile robot having legs provided with translatory joints, assist devices for applying assisting driving forces may be provided on the translatory joints. Industrial Applicability

As described above, the leg joint assist device of a legged mobile robot in accordance with the present invention is useful as the one that allows an assisting driving force to be properly applied to a joint of a leg of a legged mobile robot, such as a bipedal mobile robot, with reduced power consumption.

Brief Description of the Drawings

Figures 1 to 9 are included for explanatory purposes only. An embodiment of the invention is described with reference to Figures 10 to 12, with reference to Figs 1 to 9 where appropriate.

Fig. 1 is a diagram schematically showing the outlined construction of a legged mobile robot (a bipedal mobile robot) that includes an assist device described for explanatory purposes.

Fig. 2 is a graph showing a relationship between assisting forces produced by a spring means (a gas spring) of the assist device provided in the robot shown in Fig. 1 and bending angles of a knee joint.

Fig. 3 is a sectional view showing a construction of a solenoid switching valve provided in the assist device of the robot of Fig. 1.

Fig. 4 is a block diagram showing a functional construction of a control unit equipped in the robot of Fig. 1.

Fig. 5 is a flowchart showing the processing by the control unit of Fig. 4.

Fig. 6 is a flowchart showing the subroutine processing of the flowchart shown in Fig. 5.

Fig. 7(a) is a graph illustrating a time-dependent change in a bending angle of a knee joint of a leg in a running motion mode of the robot of Fig. 1; Fig. 7(b) is a graph illustrating a time-dependent change in a required rotational force of a knee joint; Fig. 7(c) is a timing chart of a required operation mode of the solenoid switching valve in the first illustrated assist device;

Fig. 7(d) is a timing chart of the supply of current to the solenoid switching valve in the first illustrated assist device; and Fig. 7(e) is a graph illustrating a time-dependent change in a pressure difference (a differential pressure) between air chambers in the first illustrated assist device.

Fig. 8(a) is a graph illustrating a time-dependent change in a bending angle of a knee joint in the running motion mode of the robot of Fig. 1; Fig. 8(b) is a graph illustrating a time-dependent change in an assisting driving force of a knee joint generated by the first illustrated assist device; and Fig. 8(c) is a graph illustrating, by a solid line, a time-dependent change in torque generated in an electric motor of the knee joint in the first assist device.

Fig. 9 is a sectional view showing the construction of a solenoid switching valve provided in a second assist device described for explanatory purposes.

Fig. 10 is a sectional view showing the construction of a solenoid switching valve provided in an assist device in a first illustrated embodiment of the present invention.

Fig. 11 is a flowchart showing the subroutine processing of the control processing by a control unit in the first embodiment.

Fig. 12 (a) is a graph illustrating a time-dependent change in a bending angle of a knee joint of a leg in a running motion mode of the robot of Fig. 1; Fig. 12(b) is a graph illustrating a time-dependent change in a required rotational force of a knee joint; Fig. 12(c) is a timing chart of a required operation mode of the solenoid switching valve in the first embodiment; Fig. 12(d) is a timing chart of the supply of current to the solenoid switching valve in the first embodiment; and Fig. 12(e) is a graph illustrating a time-dependent change in a pressure difference (a differential pressure) between air chambers in the first embodiment.

## Claims

1.  A legged mobile robot equipped with a plurality of legs formed by consecutively installing a plurality of link members (4,5,6) from a body (2) through the intermediary of a plurality of joints (7,8,9), and having a leg joint assist device, the leg joint assist device comprising: an air chamber (16,17) provided such that its volume changes according to relative displacement motions of a pair of link members (4,5) connected by a specific joint (8), at least one joint of the plurality of joints of each leg being defined as the specific joint (8); a gas passage (22) provided in communication with the air chamber (16,17) to implement circulation of a gas between the air chamber and an outside thereof; and a solenoid switching valve (70) provided in the gas passage (22) such that it can be opened and closed, wherein the air chamber (16,17) is hermetically sealed by closing the solenoid switching valve (70) in a predetermined period when the robot travels so as to use an elastic force generated by the gas due to compression or expansion of the gas in the air chamber caused by a change in the volume of the hermetically sealed air chamber as an assisting driving force for the specific joint, the assisting driving force together with a driving force of a joint actuator (10) that drives the specific joint (8) is applied to the specific joint, and the solenoid switching valve (70) is opened in a period other than the predetermined period to place the air chamber (16,17) in a non-hermetically-sealed state so as to set a maximum value of an elastic force generated by the gas in the air chamber due to a change in the volume of the air chamber to be smaller than at least an elastic force in the predetermined period,

**characterised in that** the predetermined period is a period during which the volume of the air chamber (16,17) changes according to the relative displacement motions of the pair of link members (4,5) such that the pressure difference between the air chamber and the outside increases from the start of the predetermined period and then decreases to a pressure difference that is substantially equal to the pressure difference at the start,

the solenoid switching valve (70) is installed in the gas passage (22) such that the pressure difference acts on the valve element (33) of the solenoid switching valve in a valve closing direction of the valve element in the predetermined period, and the solenoid switching valve (70) comprises an urging means (71) for urging the valve element (33) in a valve opening direction to actuate the valve element of the solenoid switching valve from the valve-closed state to the valve-open state when the pressure difference decreased to a predetermined value or less, and the solenoid switching valve (70) is constructed such that the valve element (33) is actuated from the valve-open state to the valve-closed state against an urging force of the urging means (71) by energizing a solenoid (39) of the solenoid switching valve in the valve-open state of the valve element, and

the solenoid (39) of the solenoid switching valve (70) is energized only during a period of the predetermined period from the start thereof until the pressure difference increases to a pressure difference that makes it possible to hold the valve element in the valve-closed state against an urging force of the urging means (71).

2. The legged mobile robot according to Claim 1, further comprising: a cylinder (14) connected to one link member (5) of the pair of link members and a piston (15) that is connected to the other link member (4) of the pair of the link members through the intermediary of a piston rod (20) and inserted in the cylinder such that the piston slidably moves in the cylinder in response to relative displacement motions of the pair of link members, wherein the air chamber is composed of a pair of air chambers (16,17) formed on both sides of the piston (15) in the cylinder (14), and the gas passage (22) is a passage that provides communication between the pair of air chambers in the cylinder.

3. The legged mobile robot according to Claim 1, wherein the predetermined period is a period during which each leg when a legged mobile robot is traveling in a predetermined gait mode is in contact with a floor.

4. The legged mobile robot according to Claim 1, wherein the legged mobile robot is a bipedal mobile robot equipped with two of the legs, and each leg is provided with a knee joint (8) that allows the leg to bend and stretch at a middle part between the distal portion thereof and the end thereof adjacent to the body (2), and the specific joint is the knee joint (8).

5. The legged mobile robot according to Claim 3, wherein the predetermined period is a period during which a pattern of a time-dependant change of a bending degree of the leg at the knee joint (8) bulges in the direction in which the bending degree increases in the period during which each leg is in contact with a floor when the bipedal mobile robot is in a running motion mode.

6. The legged mobile robot according to Claim 3, wherein the predetermined period is a period during which a pattern of a time-dependant change of a rotational force to be generated in the knee joint (8) bulges in the direction in which the leg is stretched in the period during which each leg is in contact with a floor when the bipedal mobile robot is in the running motion mode.

7. The legged mobile robot according to Claim 1, further comprising: a means for determining a desired driving force of the specific joint (8) to cause the legged mobile robot to follow a desired gait of the robot; and a means for controlling a driving force of the joint actuator (10) of the specific joint in the predetermined period such that the sum of the driving force of the joint actuator and the assisting driving force becomes the determined desired driving force.

**EP 1 808 276 B1**

**Patentansprüche**

1. Mobiler Roboter mit Beinen, welcher mit einer Mehrzahl von Beinen versehen ist, die durch aufeinander folgende Installation einer Mehrzahl von Verbindungselementen (4,5,6) von einem Körper (2) durch das dazwischen Anordnen einer Mehrzahl von Gelenken (7;8,9) gebildet sind, und welcher eine Beingelenkunterstützungsvorrichtung aufweist, wobei die Beingelenkunterstützungsvorrichtung umfasst:

   eine Luftkammer(16,17), die derart bereitgestellt ist, dass ihr Volumen sich entsprechend der Relativverlagerungsbewegungen eines Paares von Verbindungselementen (4,5) ändert, die durch ein spezifisches Gelenk (8) verbunden sind,

   wobei wenigstens ein Gelenk von der Mehrzahl von Gelenken von jedem Bein als das spezifische Gelenk (8) definiert ist;
   eine Gaspassage (22), die in Verbindung mit der Luftkammer (16,17) bereitgestellt ist, um die Zirkulation eines Gases zwischen der Luftkammer und einer Außenseite davon zu realisieren;
   und ein Solenoidumschaltventil (70), das in der Gaspassage (22) bereitgestellt ist, so dass es geöffnet und geschlossen werden kann,
   wobei die Luftkammer (16,17) durch das Schließen des Solenoidumschaltventils (70) in einem vorbestimmten Zeitraum luftdicht verschlossen ist, wenn der Roboter sich bewegt, um eine elastische Kraft, die durch das Gas durch eine durch Veränderung des Volumens-der luftdicht verschlossenen Luftkammer verursachte Kompression oder Expansion des Gases in der Luftkammer erzeugt wird, als eine unterstützende Antriebskraft für das spezifische Gelenk zu benutzen,
   wobei die unterstützende Antriebskraft zusammen mit einer Antriebskraft eines Gelenkaktuators (10), der das spezifische Gelenk (8) antreibt, auf das spezifische Gelenk angewandt wird,
   und wobei das Solenoidumschaltventil (70) in einem von dem vorbestimmten Zeitraum verschiedenen Zeitraum geöffnet ist, um die Luftkammer (16,17) in einen nicht luftdicht geschlossenen Zustand einzustellen, um einen maximalen Wert einer elastischen Kraft, die durch das Gas in der Luftkammer erzeugt wird, auf einen kleineren Wert als der Wert wenigstens einer elastischen Kraft in dem vorbestimmten Zeitraum zu setzten,
   **dadurch gekennzeichnet,**
   **dass** der vorbestimmte Zeitraum ein Zeitraum ist, während welchem das Volumen der Luftkammer (16,17) sich entsprechend der Relativverlagerungsbewegungen des Paares von Verbindungselementen (4,5) derart ändert, dass der Druckunterschied zwischen der Luftkammer und der Umgebung vom Beginn des vorbestimmten Zeitraumes zunimmt und danach auf einen Druckunterschied abnimmt, der im Wesentlichen dem Druckunterschied zu Beginn gleich ist,
   wobei das Solenoidumschaltventil (70) in der Gaspassage (22) derart angebracht ist, dass der Druckunterschied auf das Ventilelement (33) des Solenoidumschaltventils in eine Ventil-schließende Richtung des Ventilelements in dem vorbestimmten Zeitraum wirkt, und
   wobei das Solenoidumschaltventil (70) Vorspannmittel (71) zum Spannen des Ventilelements (33) in eine Ventil-öffnende Richtung umfasst, um das Ventilelement des Solenoidumschaltventils aus dem Ventil-geschlossenen Zustand in den Ventil-offenen Zustand zu betätigen, wenn der Druckunterschied auf einen vorbestimmten Wert oder weniger abnimmt, und
   wobei das Solenoidumschaltventil (70) derart angefertigt ist, dass das Ventilelement (33) aus dem Ventil-offenen Zustand in den Ventil-geschlossenen Zustand gegen eine Spannkraft der Vorspanmittel (71), durch Erregen eines Solenoids (39) des Solenoidumschaltventils in dem Ventil-offenen Zustand des Ventilelements betätigt wird, und
   wobei das Solenoid (39) des Solenoidumschaltventils (70) nur während eines Zeitraums des vorbestimmten Zeitraums erregt ist, von dessen Beginn bis zum Anstieg des Druckunterschieds auf einen Druckunterschied, der es ermöglicht, das Ventilelement in dem Ventil-geschlossenen Zustand gegen eine Spannkraft der Vorspannmittel (71) zu halten.

2. Mobiler Roboter mit Beinen nach Anspruch 1,
   ferner umfassend:

   einen Zylinder (14), der mit einem Verbindungselement (5) des Paares von Verbindungselementen verbunden ist, und
   einen Kolben (15), der mit dem anderen Verbindungselement (4) des Paares von Verbindungselementen mittels einer Kolbenstange (20) verbunden ist und in dem Zylinder eingeführt ist, so dass sich der Kolben in dem Zylinder als Antwort auf der Relativverlagerungsbewegungen des Paares der Verbindungselemente verschiebbar bewegt,

wobei die Luftkammer aus einem Paar von Luftkammern (16, 17) zusammengesetzt ist, die beidseits des Kolbens (15) in dem Zylinder (14) gebildet sind, und

wobei die Gaspassage (22) eine Passage ist, die eine Verbindung zwischen dem Paar der Luftkammern in dem Zylinder bereitstellt.

3. Mobiler Roboter mit Beinen nach Anspruch 1,
wobei der vorbestimmte Zeitraum ein Zeitraum ist, während welchem jedes Bein in Kontakt mit einem Boden ist, wenn sich der mobile Roboter mit Beinen in einem vorbestimmten Gangmodus bewegt.

4. Mobiler Roboter mit Beinen nach Anspruch 1,
wobei der mobile Roboter mit Beinen ein zweifüßiger mobiler Roboter ist, der mit zwei Beinen ausgestattet ist, und wobei jedes Bein mit einem Kniegelenk (8) bereitgestellt ist, welches es ermöglicht, das Bein an einem Mittelteil zwischen dem distalen Teil des Beines und dessen an dem Körper (2) anliegenden Ende zu beugen und zu strecken, und

wobei das spezifische Gelenk das Kniegelenk (8) ist.

5. Mobiler Roboter mit Beinen nach Anspruch 3,
wobei der vorbestimmte Zeitraum ein Zeitraum ist, während welchem ein Muster einer zeitabhängigen Änderung eines Beugegrades des Beines an dem Kniegelenk (8) sich in der Richtung wölbt, in welcher der Beugegrad in dem Zeitraum zunimmt, während welchem jedes Bein in Kontakt mit einem Boden ist, wenn sich der zweifüßige mobile Roboter in einem Laufbewegungsmodus befindet.

6. Mobiler Roboter mit Beinen nach Anspruch 3,
wobei der vorbestimmte Zeitraum ein Zeitraum ist, während welchem ein Muster einer zeitabhängigen Änderung einer Drehkraft, die in dem Kniegelenk (8) zu erzeugen ist, sich in der Richtung wölbt, in welcher das Bein während eines Zeitraumes in welchem jedes Bein im Kontakt mit einem Boden ist, gestreckt ist, wenn sich der zweifüssige mobile Roboter in dem Laufbewegungsmodus befindet.

7. Mobiler Roboter mit Beinen nach Anspruch 1,
ferner umfassend:

Mittel zum Bestimmen einer gewünschten Antriebskraft des spezifischen Gelenkes (8), um den mobilen Roboter mit Beinen zu veranlassen, einen gewünschten Gang des Roboters zu folgen, und
Mittel zum Regeln/Steuern einer Antriebskraft des Gelenkaktuators (10) des spezifischen Gelenkes während des vorbestimmten Zeitraumes derart, dass die Summe der Antriebskraft des Gelenkaktuators und der unterstützenden Antriebskraft die bestimmte gewünschte Antriebskraft wird.

## Revendications

1. Robot mobile marcheur équipé d'une pluralité de jambes formées en installant consécutivement une pluralité d'éléments de liaison (4, 5, 6) à partir d'un corps (2) par l'intermédiaire d'une pluralité de joints (7, 8, 9), et comportant un dispositif d'assistance de joint de jambe, le dispositif d'assistance de joint de jambe comprenant : une chambre à air (16, 17) prévue de sorte que son volume change selon des mouvements de déplacement relatifs d'une paire d'éléments de liaison (4, 5) reliés par un joint spécifique (8), au moins un joint parmi la pluralité de joints de chaque jambe étant défini comme le joint spécifique (8) ; un passage de gaz (22) prévu en communication avec la chambre à air (16, 17) pour réaliser la circulation d'un gaz entre la chambre à air et un extérieur de celle-ci ; et une électrovanne (70) prévue dans le passage de gaz (22) de sorte qu'elle puisse être ouverte et fermée, dans lequel la chambre à air (16, 17) est fermée hermétiquement en fermant l'électrovanne (70) dans une période prédéterminée lorsque le robot se déplace afin d'utiliser une force élastique générée par le gaz en raison de la compression ou de la dilatation du gaz dans la chambre à air entraînée par un changement du volume de la chambre à air fermée hermétiquement en tant que force motrice d'assistance pour le joint spécifique, la force motrice d'assistance, conjointement à une force motrice d'un actionneur de joint (10) qui entraîne le joint spécifique (8), est appliquée sur le joint spécifique, et la électrovanne (70) est ouverte dans une période autre que la période prédéterminée pour mettre la chambre à air (16, 17) dans un état non hermétiquement fermé afin de régler une valeur maximum d'une force élastique générée par le gaz dans la chambre à air en raison d'un changement du volume de la chambre à air pour qu'elle soit inférieure à au moins une force élastique dans la période prédéterminée,
**caractérisé en ce que** la période prédéterminée est une période au cours de laquelle le volume de la chambre à air (16, 17) change selon les mouvements de déplacement relatifs de la paire d'éléments de liaison (4, 5) de sorte que la différence de pression entre la chambre à air et l'extérieur augmente dès le début de la période prédéterminée et puis diminue jusqu'à une différence de pression qui est sensiblement égale à la différence de pression au début, l'électrovanne (70) est installée dans le passage de gaz (22) de sorte que la différence de pression agisse sur l'élément de valve (33) de la électrovanne dans une direction de fermeture de valve de l'élément de valve dans la période prédéterminée, et la électrovanne (70) comprend un moyen de poussée (71) pour pousser l'élément de valve (33) dans une direction d'ouverture de valve pour actionner l'élément de valve de la électrovanne de l'état de valve fermée à l'état de valve ouverte lorsque la différence de pression a diminué jusqu'à une valeur prédéterminée ou moins, et la électrovanne (70) est construite de sorte que l'élément de valve (33) soit actionné de l'état de valve ouverte à l'état de valve fermée contre une force de poussée du moyen de poussée (71) en mettant sous tension un solénoïde (39) de la électrovanne dans l'état de valve ouverte de l'élément de valve, et

le solénoïde (39) de l'électrovanne (70) est mis sous tension seulement au cours d'une période de la période prédéterminée dès le début de celle-ci jusqu'à ce que la différence de pression augmente jusqu'à une différence de pression qui permette de maintenir l'élément de valve dans l'état de valve fermée contre une force de poussée du moyen de poussée (71).

**2.** Robot mobile marcheur selon la revendication 1, comprenant en outre : un cylindre (14) relié à un élément de liaison (5) de la paire d'éléments de liaison et un piston (15) qui est relié à l'autre élément de liaison (4) de la paire des éléments de liaison par l'intermédiaire d'une tige de piston (20) et insérée dans le cylindre de sorte que le piston se déplace de façon coulissante dans le cylindre en réponse à des mouvements de déplacement relatifs de la paire d'éléments de liaison, dans lequel la chambre à air se compose d'une paire de chambres à air (16, 17) formées sur les deux côtés du piston (15) dans le cylindre (14), et le passage de gaz (22) est un passage qui assure une communication entre la paire de chambres à air dans le cylindre.

**3.** Robot mobile marcheur selon la revendication 1, dans lequel la période prédéterminée est une période au cours de laquelle chaque jambe, lorsqu'un robot mobile marcheur se déplace dans un mode de marche prédéterminé, est en contact avec un sol.

**4.** Robot mobile marcheur selon la revendication 1, dans lequel le robot mobile marcheur est un robot mobile à deux jambes équipé de deux des jambes, et chaque jambe est pourvue d'une articulation de genou (8) qui permet à la jambe de fléchir et de s'étirer dans une partie médiane entre la partie distale de celle-ci et l'extrémité de celle-ci adjacente au corps (2), et le joint spécifique est l'articulation de genou (8).

**5.** Robot mobile marcheur selon la revendication 3, dans lequel la période prédéterminée est une période au cours de laquelle un modèle d'un changement temporaire d'un degré de flexion de la jambe à l'articulation de genou (8) s'accroît dans la direction dans laquelle le degré de flexion augmente dans la période au cours de laquelle chaque jambe est en contact avec un sol lorsque le robot mobile à deux jambes est dans un mode de mouvement de course.

**6.** Robot mobile marcheur selon la revendication 3, dans lequel la période prédéterminée est une période au cours de laquelle un modèle d'un changement temporaire d'une force de rotation destinée à être générée dans l'articulation de genou (8) s'accroît dans la direction dans laquelle la jambe est étirée dans la période au cours de laquelle chaque jambe est en contact avec un sol lorsque le robot mobile à deux jambes est dans le mode de mouvement de course.

**7.** Robot mobile marcheur selon la revendication 1, comprenant en outre : un moyen pour déterminer une force motrice souhaitée du joint spécifique (8) pour forcer le robot mobile marcheur à suivre une marche souhaitée du robot ; et un moyen destiné à commander une force motrice de l'actionneur de joint (10) du joint spécifique dans la période prédéterminée de sorte que la somme de la force motrice de l'actionneur de joint et de la force motrice d'assistance devienne la force motrice souhaitée déterminée.

# FIG.1

FORWARD

# FIG.2

KNEE ROTATIONAL ASSISTING
FORCE BY SPRING MEANS

# FIG.3

## FIG.4

ACTUAL FLOOR REACTION FORCE OF FOOT

ACTUAL INCLINATION ANGLE OF BODY

ACTUAL ROTATIONAL ANGLE OF MOTOR

40(CONTROL UNIT)

51 GAIT GENERATOR

GAIT PARAMETER (DESIRED GAIT)

52 MOTOR CONTROLLER

TORQUE COMMAND

43 MOTOR DRIVER CIRCUIT

10,etc.

LOCKING PERIOD

53 SOLENOID SWITCHING VALVE CONTROLLER

23 SOLENOID SWITCHING VALVE

EP 1 808 276 B1

## FIG.5

START

STEP1
GAIT CHANGEOVER TIMING?    NO

YES    STEP2
GENERATE GAIT PARAMETERS.

STEP3
DETERMINE INSTANTANEOUS DESIRED GAIT.

STEP4
COMPOSITE-COMPLIANCE OPERATION PROCESSING
(CORRECT DESIRED FOOT POSITION/POSTURE.)

STEP5
DETERMINE BASIC TORQUE COMMAND OF ELECTRIC MOTOR OF EACH JOINT.

STEP6
PROCESSING FOR CONTROLLING SUPPLY OF CURRENT TO SOLENOID SWITCHING VALVE

STEP7
ESTIMATE KNEE ROTATIONAL ASSISTING FORCE BY SPRING MEANS.

STEP8
DETERMINE FINAL TORQUE COMMAND OF ELECTRIC MOTOR OF EACH JOINT.

STEP9
OUTPUT FINAL TORQUE COMMAND TO MOTOR DRIVER CIRCUIT.

END

# FIG.6

STEP6

( START )

STEP6-1

SET LOCKING PERIOD.

STEP6-2

DETERMINE CLOSING CURRENT SUPPLY TIME $\triangle$ Tclose AND OPENING CURRENT SUPPLY TIME $\triangle$ Topen.

STEP6-3

else $\quad$ CURRENT TIME t? $\quad$ $T1 \leqq t \leqq T1 + \triangle Tclose$

$T2 \leqq t \leqq T2 + \triangle Topen$

STEP6-6

CUT OFF CLOSING CURRENT AND OPENING CURRENT SUPPLIED TO SOLENOID SWITCHING VALVE.

STEP6-5

SUPPLY OPENING CURRENT TO SOLENOID SWITCHING VALVE.

STEP6-4

SUPPLY CLOSING CURRENT TO SOLENOID SWITCHING VALVE.

( RETURN )

# FIG.7

**DESIRED KNEE BENDING ANGLE**

(a)

$\theta$ offmin

0   SUPPORTING LEG PERIOD   FREE LEG PERIOD   TIME

T1   T2

**REQUIRED KNEE ROTATIONAL FORCE**

(+)

BENDING
DIRECTION 0   TIME

(b)

STRETCHING
DIRECTION
(+)

**REQUIRED OPERATION MODE OF
SOLENOID SWITCHING VALVE**

(c)

CLOSE
OPEN   LOCKING PERIOD   TIME

**ENERGIZATION STATE OF
SOLENOID SWITCHING VALVE**

CLOSING
CURRENT
off   TIME
OPENING
CURRENT   $\Delta$ Tclose   $\Delta$ Topen

(d)

**DIFFERENTIAL PRESSURE**

(+)
0   P1   P2   TIME

(e)

T1   T2

# FIG.8

**DESIRED KNEE BENDING ANGLE**

(a)

θ offmin

T1    LOCKING PERIOD    T2

0                                    TIME

SUPPORTING LEG PERIOD     FREE LEG PERIOD

**KNEE ROTATIONAL ASSISTING FORCE**

(+)
BENDING DIRECTION

(b)

0                                    TIME

STRETCHING DIRECTION
(−)

**GENERATED TORQUE IN KNEE JOINT ELECTRIC MOTOR**

(+)
BENDING DIRECTION
0                                    TIME

(c)

STRETCHING DIRECTION
(−)
REQUIRED KNEE ROTATIONAL FORCE

EP 1 808 276 B1

# FIG.9

# FIG.10

28

EP 1 808 276 B1

FIG.11

STEP6
START

STEP6-11
SET LOCKING PERIOD.

STEP6-12
DETERMINE CLOSING CURRENT
SUPPLY TIME △Tclose.

STEP6-13
CURRENT TIME t?    T1≦t≦T1+△Tclose

else
STEP6-15                              STEP6-14
CUT OFF CLOSING CURRENT AND      SUPPLY CLOSING
OPENING CURRENT SUPPLIED TO      CURRENT TO SOLENOID
SOLENOID SWITCHING VALVE.        SWITCHING VALVE.

RETURN

29

## FIG.12

**DESIRED KNEE BENDING ANGLE**

**(a)**

θ offmin

0

SUPPORTING LEG PERIOD

FREE LEG PERIOD

T1    T2

TIME

**REQUIRED KNEE ROTATIONAL FORCE**

(+)

BENDING DIRECTION

**(b)**

0

STRETCHING DIRECTION

(+)

TIME

**REQUIRED OPERATION MODE OF SOLENOID SWITCHING VALVE**

**(c)**

CLOSE

OPEN

LOCKING PERIOD

TIME

**ENERGIZATION STATE OF SOLENOID SWITCHING VALVE**

**(d)**

CLOSING CURRENT

off

Δ Tclose

TIME

**DIFFERENTIAL PRESSURE**

(+)

**(e)**

0

P3

TIME

T1    T2

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2003103480 A
- EP 1442846 A
- GB 2022783 A
- JP H11300660 B